(19) Europäisches Patentamt
European Patent Office
Office européen des brevets

(11) EP 1 403 138 A1

(12) EUROPEAN PATENT APPLICATION

(43) Date of publication:
**31.03.2004 Bulletin 2004/14**

(51) Int Cl.[7]: **B60Q 1/48**

(21) Application number: **03022000.8**

(22) Date of filing: **30.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **30.09.2002 JP 2002284716**

(71) Applicant: **Aisin Seiki Kabushiki Kaisha**
**Kariya-shi, Aichi-ken (JP)**

(72) Inventors:
- **Yamamoto, Shuji**
  **Toyota-shi Aichi-ken (JP)**
- **Kakinami, Toshiaki**
  **Nagoya-shi Aichi-ken (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(54) **Movable body circumstance monitoring apparatus**

(57) A movable body circumstance monitoring apparatus includes image capturing means mounted on a movable body for obtaining an image of surrounding of the movable body, three-dimensional environment constructing means for constructing a three-dimensional environment of the surrounding of the movable body based upon the image obtained by the image capturing means, and judging means for judging whether or not the surrounding of the movable body satisfies a predetermined condition based upon the three-dimensional environment constructed by the three-dimensional environment constructing means.

FIG. 1

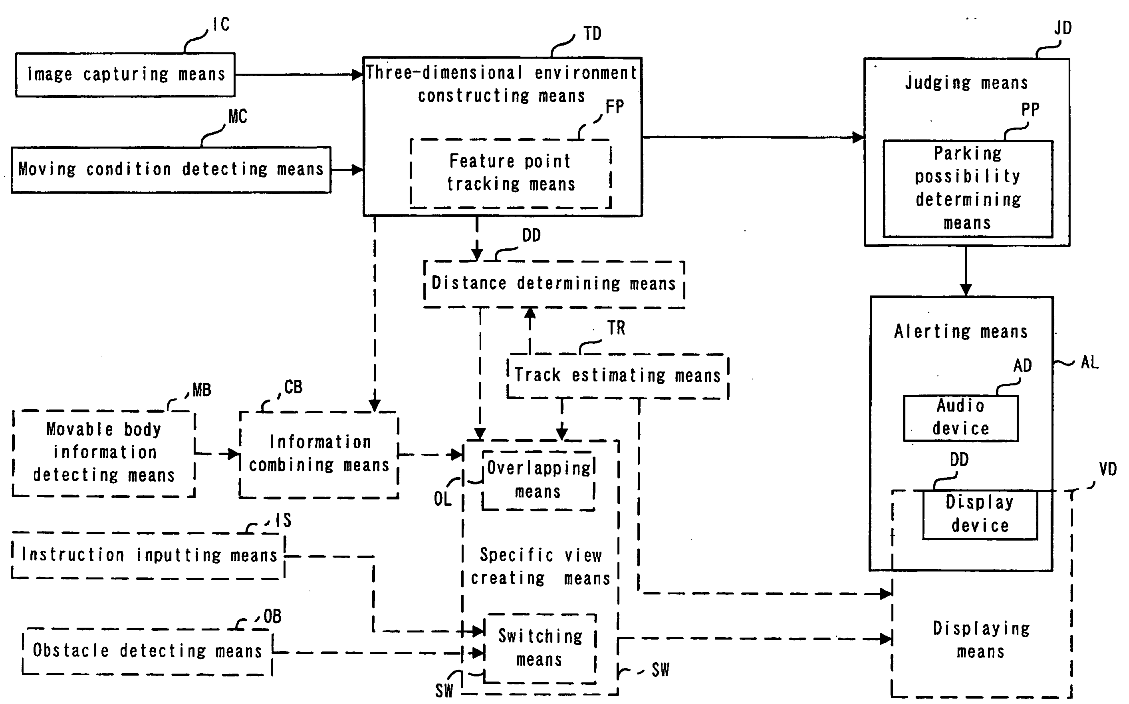


EP 1 403 138 A1

Printed by Jouve, 75001 PARIS (FR)

## Description

### FIELD OF THE INVENTION

This invention generally relates to a movable body circumstance monitoring apparatus optimized for monitoring circumstance of a movable body. More particularly, this invention pertains to a movable body circumstance monitoring apparatus for judging whether or not environment around a movable body satisfies a predetermined condition. For example, the movable body circumstance monitoring apparatus is preferably utilized for monitoring surrounding of a vehicle as the movable body and for judging whether or not the vehicle can be parked at a predetermined region.

### BACKGROUND OF THE INVENTION

Conventionally, various types of parking aid systems have been widely known. For example, disclosed is a parking aid system in a Japanese Patent Laid-open published as No. 2001-334899 (Patent document 1). The parking aid system can make easier for a user or a driver to park a vehicle by notifying the user a start position to turn a steering wheel based upon information around the vehicle obtained by an image capturing device.

As another example, disclosed is a method of parking and a parking apparatus in a Japanese patent Laid-open published as No. 1997-180100 (Patent document 2). According to the disclosure therein, the vehicle can be judged whether the vehicle can be parked in a parking space prior to start of the parking operation. For example, a size of the parking space is detected prior to the start of the parking operation. An obstacle can be detected if there is an obstacle appearing in the parking space prior to the start of the parking operation. Further the vehicle can be judged whether the vehicle can be parked at the minimum turning radius from the vehicle stop position.

As a further example, disclosed is a parking support system in a Japanese Patent Laid-open published as No. 2001-187553 (Patent document 3). The parking support system includes a single camera for photographing surroundings of a moving vehicle at first and second points, an imaging unit for converting the surroundings of the moving vehicle into first and second images which are produced in time series, a stereoscopic object-specifying unit for detecting and specifying a stereoscopic object in each image, a vehicle position calculating unit for calculating a vehicle moving data from the first point to the second point, and a stereoscopic object distance calculating unit for calculating a distance between the vehicle and the stereoscopic object based upon the positions of the stereoscopic object in the first and second images and the vehicle moving data. The parking support system including the above structure generates a third image for instructing the driver based upon the images by the imaging unit and the distance between the vehicle and the stereoscopic object calculated by the stereoscopic object distance calculating unit. Therefore, an accurate distance between the vehicle and the stereoscopic object can be calculated in accordance with principles of triangulation modes with the stereoscopic object in the first and second images.

In the meantime, a conventional technique has been widely known in an image processing technical field, which reconstructs a three-dimensional (3D) shape by use of two cameras. For example, a thesis "2. Solve a Stereophonic mechanism" (Nonpatent document 1) by Koichiro Deguchi in a publication entitled "Information Processing" (date of publication of vol. 37 No. 7: July, 1996) describes gauging a stereoscopic object by a stereo. According to the disclosure in the thesis, a position of each corresponding point in the space can be determined based upon features of the respective images shot by the two cameras (e.g. focal lengths of the two camera lenses, image centers thereof, pixel size thereof, and so on), positions and postures of the two cameras, and a corresponding of the two images.

Likewise, according to a column "Three-dimensional shape reconstruction by a stereo vision" (Nonpatent document 2) at pages 161 and 162 in a publication entitled "Mathematics of Spatial data" (date of publication of the first edition: March 10, 1995, publishing office: Asakura, Inc., author: KANATANI, Kenichi), a stereo vision is defined as a method of calculating a three-dimensional shape of a substance in accordance with principles of triangulation modes based upon a corresponding relation between the images shot by two cameras. The stereo vision is further defined as one of the most fundamental methods of extracting a three-dimensional information from images so as to be used for a robot control.

Further, according to another thesis "3. Manipulation of Videos" (Nonpatent document 3) by Koichiro Deguchi in the publication entitled "Information Processing" (date of publication of vol. 37 No. 8:August, 1996), a three-dimensional shape of an object in a video can be reconstructed in accordance with the same principles of the aforementioned stereo. Especially, when the video is produced with sequential images, the motion of the object can be tracked. Therefore, the video is considered to be more preferable than only two images in this regard for extracting corresponding points.

According to the patent document 1, the system reads out a target parking position where the driver intends to park the own vehicle from the parking start position and guides vehicle parking based upon the read out parking position. However, the target parking position is inputted following the driver's intention based upon the notified information such that there may a case that the vehicle actually can not be parked in the target parking position. The vehicle parking guide can not be cancelled when there is not an enough space to park the vehicle in the target parking position. Therefore, there was a case that the vehicle could not be parked following the parking guide.

According to the patent document 2, disclosed is whether or not the vehicle can be parked with the minimum turning radius from an initial stop position. This may limit a method for parking the vehicle. In other words, the vehicle at the initial stop position is judged that the vehicle can not be parked even if the vehicle can be parked with repeated steering wheel turns unless the vehicle can be parked with the minimum turning radius. Further, this patent document does not imply or suggest vehicle parking accompanied with plural steering wheel turns.

According to the above-described Patent document 3, an image A shot while the vehicle 1 is at a position a is converted to an image as if it were shot while the vehicle 1 was at a position b, wherein an image C can be calculated. Although a distance between the vehicle and a stereoscopic object can be geometrically calculated based upon a 'deviation between the two images. and the vehicle moving data, the vehicle is not judged whether or not the vehicle can be parked in the predetermined region.

As described above, the conventional apparatus such as the above-described parking aid system and the parking support system is not optimized for judging whether or not the vehicle can be parked in the predetermined region. Still more, the apparatus is not optimized for judging it based upon the information of the environment around the vehicle. If the above described image processing technique is applied for the apparatus, a three-dimensional shape of an obstacle can be restored, for example by use of one camera. However, any of them do not suggest or imply the apply of the image processing technique to the vehicle parking assist apparatus. Recent demands have lead not only to the above-described vehicle parking assist system but also to a movable body circumstance monitoring apparatus for monitoring surrounding of a movable body such as a robot. In this case, the apparatus has been demanded to judge whether or not environment around the movable body satisfies a predetermined condition, for example to judge whether a predetermined region is included in the environment around the movable body, to judge whether an obstacle appears in a predetermined region in the environment around the movable body, or the like.

A need thus exists for providing an improved movable body circumstance monitoring apparatus capable of monitoring surrounding of a movable body and judging whether environment surrounding the movable body satisfies a predetermined condition.

## SUMMARY OF THE INVENTION

In light of foregoing, according to an aspect of the present invention, a movable body circumstance monitoring apparatus characterized in that the apparatus includes image capturing means mounted on a movable body for obtaining an image of surrounding of the movable body, three-dimensional environment constructing means for constructing' a three-dimensional environment of the surrounding of the movable body based upon the image obtained by the image capturing means, and judging means for judging whether or not the surrounding of the movable body satisfies a predetermined condition based upon the three-dimensional environment constructed by the three-dimensional environment constructing means (TD).

It is preferable that thee apparatus further includes moving condition detecting means for detecting moving condition of the movable body at least at a first position and a second position, and at least one image capturing device included in the image capturing means and mounted at a predetermined portion of the movable body. Therefore, the three-dimensional environment constructing means constructs the three-dimensional environment of the surrounding of the movable body based upon images obtained at least at the first and second positions of the movable body by the image capturing device.

The moving condition detecting means includes a speed detecting device for detecting a moving speed of the movable body. A distance at least between the first and second positions of the movable body can be determined based upon the result detected by the speed detecting device.

The image capturing means includes plural image capturing devices provided at least at two positions of the movable body with a predetermined distance therebetween. The three-dimensional environment constructing means constructs the three-dimensional environment of the surrounding of the movable body based upon images obtained by the plural image capturing devices.

It is further preferable that the apparatus also includes alerting means for alerting the result by the judging means when the judging means judges that the environment surrounding the movable body satisfies the predetermined condition.

The alerting means includes at least either a display device for displaying the result by the judging means or an audio device for transmitting the result by the judging means in an audio manner.

When the movable body corresponds to a vehicle, the judging means can be a parking possibility determining means for determining that the predetermined condition is satisfied when the judging means judges that there is a region possessing a predetermined size in the surrounding of the vehicle and the vehicle can be park in the region when the movable body is the vehicle. In this case, the movable body circumstance monitoring apparatus can be applied as a vehicle parking guide system.

It is preferable that the apparatus further includes region selecting means for selecting a region among plural regions based upon a predetermined reference for judging easiness for the vehicle parking when the parking possibility determining means determines that there are the plural regions possessing the predetermined size respectively. The predetermined reference is at least one of a moving distance from a vehicle parking start position to a vehicle parking end position, a time required for the vehicle parking, number of steering wheel turns and steering ratio, and a size of the parking possible region.

## BRIEF DESCRIPTION OF THE DRAWING FIGURES

The foregoing and additional features and characteristics of the present invention will become more apparent from the following detailed description considered with reference to the accompanying drawing figures wherein:

FIG. 1 is a block diagram illustrating a structure of a movable body circumstance monitoring apparatus according to an embodiment of the present invention;

FIG. 2 is a perspective view illustrating a vehicle mounting the movable body circumstance monitoring apparatus as a parking guide system according to the embodiment of the present invention;

FIG. 3 is a block diagram illustrating a structure of the' parking guide system according to the embodiment of the present invention;

FIG. 4 is a plan view illustrating a vehicle model according to the embodiment of the present invention;

FIG. 5 is a plan view exemplifying a method of detecting and tracking a positional coordinate of the movable body and a direction thereof after moving with reference to a positional coordinate of the vehicle and the direction thereof at a movement starting position in a predetermined three-dimensional coordinate according to the embodiment of the present invention;

FIG. 6 is a plan view exemplifying a condition specifying positional coordinate and posture of the vehicle in a third-dimensional map according to the embodiment of the present invention;

FIG. 7 is a plan view illustrating a displayed view obtained by a virtual camera arranged at a rear portion of the vehicle according to the embodiment of the present invention;

FIG. 8 is a plan view illustrating a displayed view obtained by virtual cameras respectively arranged at a front left corner of the vehicle and at a rear left corner thereof according to the embodiment of the present invention;

FIG. 9 is a plan view illustrating a displayed view shot by a virtual camera arranged at a side portion of the vehicle according to the embodiment of the present invention:

FIG.,10 is a plan view illustrating a displayed view at 180 degrees shot by a virtual camera arranged at an upper rear portion of the vehicle according to the embodiment of the present invention:

FIG. 11 is a plan view illustrating a displayed view at 360 degrees shot by a virtual camera arranged above the vehicle according to the embodiment of the present invention;

FIG. 12 is a plan view exemplifying how the displayed view varies in response to .rearward movement of the vehicle according to the embodiment of the present invention;

FIG. 13 is a plan view exemplifying an image showing a rear portion of the vehicle at a position denoted with double dashed lines in FIG. 12 and an obstacle around the vehicle;

FIG. 14 is a plan view exemplifying an image showing a rear portion of the vehicle at a position denoted with a solid line in FIG. 12 and the obstacle around the vehicle;

FIGS. 15 (A) and (B) are plan views exemplifying a monitor showing a touch panel switch, wherein a screen displayed in the monitor is shifted from a normal displayed screen (A) to a screen (B) which displays a zoomed image;

FIG. 16 is a plan view exemplifying how the displayed view varies in response to a vehicle forward movement according to the embodiment of the present invention;

FIG. 17 is a plan view exemplifying an image showing a rear portion of the vehicle at a position denoted with double dashed lines in FIG. 16 and an obstacle around the vehicle;

FIG. 18 is a plan view exemplifying an image showing a rear portion of the vehicle at a position denoted with a solid line in FIG. 16 and an obstacle around the vehicle;

FIG. 19 is a plan view exemplifying a movement of the vehicle which is parallel parked at a left-hand side along a vehicle forward moving direction;

FIG. 20 is a plan view exemplifying a virtual image of a front left corner portion of the vehicle displayed in a monitor when the vehicle is turned in an arrow direction after rearward moving in FIG. 19;

FIG. 21 is a plan view exemplifying a displayed view denoting the shortest distance from the vehicle to an obstacle on the image captured by the camera mounted at the vehicle rear portion according to the embodiment of the present invention;

FIG. 22 is a plan view exemplifying another displayed view denoting the shortest distance from the vehicle to the obstacle on the image captured by the camera mounted at the vehicle rear portion according to the embodiment of the present invention;

FIG. 23 is a view exemplifying a virtual view displaying the shortest distance from the vehicle to the obstacle and the positional relationship therebetween on the image captured by the camera mounted at the vehicle rear portion according to the embodiment of the present invention;

FIG. 24 is a plan view exemplifying a vehicle movement for parallel parking the vehicle at the left side along the vehicle forward moving direction according to the embodiment of the present invention;

FIG. 25 is a plan view exemplifying a recommended course for parallel parking the vehicle at the left side along the vehicle forward moving direction according to the embodiment of the present invention;

FIG. 26 is a process chart for exemplifying a process for parallel parking according to the embodiment;

FIG. 27 is the other process chart continuing from the process chart in FIG. 26 for exemplifying the process for parallel parking according to the embodiment;

FIG. 28 is still the other process chart continuing from the process chart in

FIG. 27 for exemplifying the process for parallel parking according to the embodiment;

FIG. 29 is an explanatory view for explaining a geometric relationship for obtaining a feature point of a substance in the space by two cameras so as to reconstruct the three-dimensional shape according to the embodiment of the present invention;

FIG. 30 is an explanatory view for exemplifying a feature point tracking so as to reconstruct the three-dimensional shape according to the embodiment of the present invention; and

FIG. 31 is an explanatory view for exemplifying a tracking so as to reconstruct the three-dimensional shape according to the embodiment of the present invention.

## DETAILED DESCRIPTION OF THE INVENTION

Preferred embodiment of the present invention will be described hereinbelow in detail with reference to the accompanying drawings.

For example, as illustrated in FIG. 1, a movable body circumstance monitoring apparatus according to the embodiment of the present invention is provided with image capturing means IC for capturing an image of an environment surrounding a movable body (not shown), three-dimensional environment constructing means TD for constructing a three-dimensional environment around the movable body based upon the image obtained by the image capturing means IC, and judging means JD for judging whether the environment around the movable body satisfies a predetermined condition based upon the three-dimensional environment constructed by the three-dimensional environment constructing means TD. The image capturing means IC can be represented for example by an image capturing device such as a ccd camera. If there are plural image capturing devices such as two image capturing devices mounted at two portions of the movable body with a predetermined distance therebetween, the three-dimensional environment around the movable body can be constructed by the three-dimensional environment constructing means TD based upon the image obtained by the image capturing means IC.

In the meantime, when the one image capturing device is applied as the image capturing means IC, the apparatus is required with a moving condition detecting means MC. That is, the moving condition detecting means MC determines a moving distance of the movable body at least from a first position to a second position. Therefore, the three-dimensional environment can be constructed by the three-dimensional environment constructing means TD based upon images obtained by the image capturing device at least at the first and second positions possessing the moving distance therebetween. When the apparatus is provided with a speed detecting device for detecting a moving speed of the movable body as the moving condition detecting means MC, the moving distance at least between the first and second positions of the movable body can be determined based upon the result detected by the speed detecting device.

Further, it is preferable that the movable body circumstance monitoring apparatus is provided with alerting means AL for alerting a result by the judging means JD when the judging means JD judges that the environment near the movable body satisfies the predetermined condition. For example, the alerting means AL can be represented by a display device DD such as a monitor disposed in the movable body for displaying the result by the judging means JD, an audio device AD for auditly transmitting the result by the judging means JD. As far as the apparatus is provided with at least one of them, a user or a driver can be supplied with visual or audio information which effectively works upon parking operation.

When the movable body above described corresponds to a vehicle, the movable body circumstance monitoring apparatus is applied as a parking guide system illustrated in FIGS. 2 and 3. In this case, the judging means JD acts as a parking possibility determining means PP for determining that the environment near the movable body satisfies the predetermined condition when a region possessing at least a predetermined size is judged to have appeared around a vehicle 1 and when the vehicle 1 is judged to be able to be parked in the region. When the vehicle 1 is judged to be able to be parked in plural regions by the parking possibility determining means PP, one region among the plural regions can be selected by a region selecting means based upon a predetermined reference for estimating easiness for the vehicle parking. The predetermined reference can be represented by at least one of a moving distance from a vehicle parking start position to a parking end position, a time required for parking, number of steering wheel turns, and steering angle of a steering wheel, and a size of the region.

As illustrated in FIG. 1, the three-dimensional environment constructing means TD includes a feature point tracking means FP. When the movable body moves from a first state to a second state, the image capturing means IC shoots the surrounding environment at least at the first and second states of the movable body. The feature point tracking means FP detects a coordinate of a feature point in the image shot at the first state and also a coordinate, which corresponds to the feature point, in the image shot at the second state. The moving condition detecting means MC detects the positions and postures of the movable body at least at the first and second states, respectively. The three-dimensional coordinate constructing means TD constructs a three-dimensional coordinate of the feature point based upon the position and posture of the movable body at the first and second states detected by the moving condition detecting means MC, the coordinate of the feature point in the image shot at the first state, and the coordinate, which corresponds to the feature point, in the image shot at the second state. When the movable body corresponds to the vehicle, the moving condition detecting means MC can be configured with a sensor for detecting the vehicle dynamic condition such as a vehicle driving speed, a vehicle steering condition, and a vehicle turning condition. Alternatively, information outputted from a movable body information detecting means MB (illustrated with broke lines in FIG. 1) can be referred to for the moving condition detecting means MC. The movable body information detecting means MB sequentially detects and stores the position and posture of the movable body.

Further, the movable body circumstance monitoring apparatus is further provided with an information combining means CB, a specific view creating means SV, and a displaying means VD. The information combining means CB combines the movable body information detected by the movable body information detecting means MB and the information of the three-dimensional environment constructing means TD, and corrects a relation of the position and posture of the movable body relative to the environment surrounding the movable body. The specific view creating means SV creates a specific view of the movable body with reference to the information of the environment surrounding the movable body located at a specific position based upon the information outputted from the information combining means CB. The displaying means VD displays a displayed image of the specific view created by the specific view creating means SV. For example, the displaying means VD can be represented by the above-described display device.

The movable body circumstance monitoring apparatus according to the embodiment of the present can be further provided with an instruction inputting means IS. The instruction inputting means IS inputs an instruction reflecting a vehicle driver's intention regarding a specific view. A switching means SW is included in the specific view creating means SV. Operation of the switching mans SW switches the specific view created by the specific view creating means SV to a view selected based upon the driver's instruction inputted by the instruction inputting means IS. A mechanical switch (not shown) may be applied as the instruction inputting means IS. Further, when the monitor (not shown) is used as the displaying means VD, a touch panel on a display screen of the monitor may be applied as the instruction inputting means IS. Still further, a voice recognition equipment may be applied as the instruction inputting means IS. The image displayed by the displaying means VD based on the output from the specific view creating means SV can be constructed with a predetermined image and other images which may have been enlarged, diminished, rotated, shot from a different viewpoint, or the like.

The movable body circumstance monitoring apparatus can be further provided with an obstacle detecting means OB for detecting an obstacle approaching to the environment surrounding the movable body based upon the information by the three-dimensional environment constructing means TD. In this case, the specific view creating means SV preferably creates the specific view which contains an obstacle detected by the obstacle detecting means OB. More particularly, the obstacle detecting means OB acts for detecting the obstacle approaching to the movable body within a predetermined distance relative thereto. For example, when the obstacle is detected to be located within a predetermined region possessing the movable body about a center of the region, an image of a view containing the obstacle can be automatically displayed.

The movable body circumstance monitoring apparatus can be further provided with a track estimating means TR for estimating a moving track of the movable body based upon the information detected by the movable body information detecting means MB. The specific view creating means SV includes an overlapping means OL for overlapping an expected moving track of the movable body estimated by the track estimating means TR on the specific view. The displaying means VD then displays an image in which the estimated moving track has overlapped the specific view. For example, an estimated vehicle driving track can be applied as the estimated moving track by the track estimating means TR. The apparatus can be still further provided with a distance determining means DD for specifying an obstacle appearing along the estimated moving track of the movable body and for determining the shortest distance between the obstacle along the estimated moving track and the moving track. The moving track estimated by the track estimating means TE overlaps the three-dimensional environment constructed by the three-dimensional constructing means TD prior to the obstacle specification and the shortest distance determination.

Output at least from one of the display device DD and the audio device AD can be adjusted in response to the shortest distance between the obstacle along the estimated moving track and the movable body. For example, a bar graph may go up and down in response to the length of the distance. Alternatively, a warning sound can be increased or decreased in response thereto. Further, the display device DS can specify a portion of the obstacle along the estimated moving track which appears closest to the vehicle and displays the portion in the monitor screen. The portion of the obstacle can be marked up in the monitor screen.

As illustrated in FIG. 2, a camera 2 (e.g. a ccd camera) corresponding to the image capturing device is mounted at a rear portion of the vehicle 1 (as non-limiting example) so as to obtain an image of the environment around there. The image information obtained by the camera 2 is provided to an electronic control unit 10. The electronic control unit 10 is housed in a container mounted on the vehicle 1 and acts as the three-dimensional environment constructing means TD and the parking possibility judging means PP. The electronic control unit 10 can act as the moving condition detecting means MC, the movable body information detecting means MB, the information combining means CB, the specific view creating means SV, the switching means SW, the overlapping means OL, the track estimating means TR, and the distance determining means DD. A steering angle sensor 4 is disposed in the vehicle 1 so as to detect a steering angle of a steering wheel 3. A shift lever switch 6 is disposed in the vehicle 1, which is turned on when a shift lever 5 is shifted to a reverse stage. The detected steering angle and the on signal are then provided to the electronic control unit 10, respectively.

With reference to FIG. 3, the steering angle sensor 4, the shift lever switch 6, and the vehicle wheel speed sensors 7 are connected to a CPU 11 in the electronic control unit 10 via an input interface (not shown). The monitor 8 is connected to a superimposing module 14 in the electronic control unit 10 via an output interface (not shown). The speaker 9 is connected to the CPU 11 via an audio outputting module 15. The camera 2 is connected to an image recognizing module 12, a graphics drawing module 13, and the superimposing module 14 via the input interface. The CPU 11, the image recognizing module 12, the graphics drawing module 13, a superimposing module 14, and an audio outputting module 15 are connected by bus bars, respectively. Information in each module is stored for a predetermined period of time and can be read out when needed.

The information of the image of the environment surrounding the vehicle 1 shot by the camera 2 is supplied to the CPU 11 for calculation via the image recognizing module 12. The signal outputted from the vehicle wheel seed sensors 7 and so on are also supplied to the CPU 11 for the calculation.

The graphics drawing module 13 draws a three-dimensional graphics in response to a synchronization signal extracted from the image shot by the camera 2 based upon the calculated result. In the meantime, calculation is performed by the CPU 11 for the purpose of the parking assistance. A graphics based upon the calculation result is drawn by the graphics drawing module 13. The graphics drawn by the graphics drawing module 13 and the image shot by the camera 2 are superposed by the superposing module 14 when needed and are displayed in the window screen of the monitor 8. In this case, it is possible to display an image containing only the graphics in the window screen of the monitor 8. As described above, the three-dimensional environment constructing means TD, the information combining means CB, and the specific view creating means SV are configured with the CPU 11, the image recognizing module 12, and the graphics drawing module 13.

As described above, when the vehicle 1 is moved from the first state to the second state, the feature point tracking means FP detects the coordinate of the feature point in the image shot at the first state by the camera 2 and also detects the coordinate, which corresponds to the feature point, in the image shot at the second state by the camera 2. The moving condition detecting means MC detects the positions and postures of the movable body at least at the first and second states, respectively. In the foregoing manner, the three-dimensional environment constructing means TD reconstructs a three-dimensional shape based upon the positions and postures of the movable body at the first and second states, the coordinate of the feature point in the image shot at the first state by the camera 2, and the coordinate, which corresponds to the feature point, in the image shot at the second state by the camera 2, wherein a three-dimensional coordinate of the feature point can be obtained.

The above-described reconstruction of the three-dimensional shape is carried out based upon the principles of triangulation by use of images as disclosed for example in the aforementioned nonpatent document 2 and are described hereinafter with reference to FIGS. 29 through 31. As illustrated in FIG. 29, when observing an identical point M in the space at least from two camera positions, as shown as o and o' on the left and right sides in FIG. 24, light rays in the air connecting the optical center of the camera and points $m_1$ and $m_2$ observed in the images shot by the respective cameras can be determined. An intersecting point of both light rays represents the point M in the space. In this case, the three-dimensional point M in a scene of interest needs to be identified between the images.

In the meantime, when the three-dimensional shape is reconstructed by use of a single camera, it is necessary to extract the feature points of an object of interest in the images and to track those feature points. Further, it is one of the conditions for reconstructing the three-dimensional shape that internal parameters (e.g. a scale factor, and an optical axis position coordinate) of the camera, and external parameters (e.g. position and posture with respect to the camera of the vehicle) are required to be well known and to have been calibrated in advance.

In order to restore the three-dimensional shape depending on the shift of the scene of interest, a corresponding stereo can be applied to determine at which position and posture of the camera each time-serial image was photographed, as far as the correspondences have been calibrated by a dead-reckoning system. However, it is necessary to identify the corresponding points in the time-serial images which are shot by the camera so as to contain the identical points, thereby enabling to reconstruct the three-dimensional shape in the scene of interest.

Detection of the feature point in the scene of interest can be carried out by detecting some feature points which characterize the object in the scene of interest. The feature points in this case correspond to points possessing appropriate characteristics which are traceable along with the processing sequence of the image. An automatic correlation shown as formula 1 discussed below can be applied for detecting the feature points. A matrix A functions to average derivatives of the image signal included in a window region W containing a point p(x, y) in the image. Thus, an optimal feature point can be obtained by using the matrix A. That is, the feature point suitable for the tracking generally corresponds to a corner and an intersecting point of lines (e.g., a block dot at a corner of the left side of the drawing in Fig. 25) and the matrix A detects this sort of feature point.

According to formula 1 below, I(x, y) shows a function of the image, $I_x$ shows a gradient of the image relative to an x-axis, Iy shows a gradient of the image relative to a y-axis, and $(x_k, y_k)$ shows an image point in the window W having (x, y) as a centre of the image.

[Formula 1]

$$A(x,y)=\begin{bmatrix} \sum_W (I_x(x_k,y_k))^2 & \sum_W (I_x(x_k,y_k)I_y(x_k,y_k)) \\ \sum_W (I_x(x_k,y_k)I_y(x_k,y_k)) & \sum_W (I_y(x_k,y_k))^2 \end{bmatrix}$$

An Image sequence I (u, t) having a coordinate of an image point at u=[x, y]$^T$ is considered for feature tracking. Presuming that the brightness of the image does not change after elapsing a minute time when a sample cycle is sufficiently short, formula 2 is obtained.

[Formula 2]

$$I(\mathrm{u},,t) = I(\delta(\mathrm{u}),t + \tau)$$

With the formula 2, δ(u) represents a motion field (i.e., projection of a three-dimensional motion vector to the image). Because the sample cycle is sufficiently short, as shown in a formula 3, the motion or the shift of the image can be approximated using only a translation element out of the motion elements including a rotation element and the translation element. "d" in the formula 3 represents a displacement vector.

[Formula 3]

$$\delta\,(\mathrm{u}) = u + d$$

In order to calculate the corresponding displacement vector d relative to each selected feature point and each tracked pair of points in the image sequence, a tracker is applied. In practice, because the motion model of the image cannot be recovered perfectly due to the influence of the noise, the above formula 2 does not function sufficiently. Accordingly, as shown in formula 4, the displacement vector d may be calculated by a sum of square difference. The displacement vector d, which minimizes a residual of the formula 4, is obtained and the feature points are tracked in the direction of the displacement vector d as illustrated in FIG. 25. "W" of the formula 4 represents a window for detecting the feature points with reference to the point u.

[Formula 4]

$$\varepsilon = \sum_{W} \left[ I(\mathbf{u} + \mathbf{d}, t + \tau) - I(\mathbf{u}, t) \right]^2$$

As illustrated in FIG. 31, a tracks is a set of points characterising an identical object among the image sequences. Image points of each track correspond to projections of respective three-dimensional points. Although the tracks of an image sequence should not be lost, the tracking has to be stopped when the tracking points cannot be detected because the points to be tracked are out of the image or are hidden, or due to noise. Hereinafter, starting from a set of the feature points detected in a first image, the feature points of the previous image, i.e., Img A in Fig. 31, are tracked in the next image, i.e., Img B in Fig. 31. In case that some of the feature points in the Img A is not tracked in the Img B, new feature points are searched in the Img B and the new feature points are referred to as starting points for the tracking thereafter.

When a distance between the position M and the camera position in the three-dimensional space is z, formula 5 is obtained with the projection at a position m in the image. With the formula 5, a distance f is referred to as a focal length. Hereinafter, the distance f is defined with a unit length at 1 so as to simplify the formula 5. In the foregoing manner, a geometric relation for shooting the feature point in the space, such as a peak point of an object, by use of two cameras can be described as illustrated in FIG. 29.

[Formula 5]

$$M = \frac{Z}{f}m \qquad M = Zm$$

As illustrated in FIG. 29, the second camera coordinate system can be produced by giving rotation matrix R and translation vector T to the first camera coordinate system with a central focus on the original viewpoint o. The translation vector T is referred to as a baseline vector. The parameters {T, R} depict a relative positional and postural relationship between these two camera viewpoints: Therefore, when the object is photographed by a single camera, the camera movement such as translation and rotation can be measured by the dead reckoning system.

Further, as illustrated in FIG. 29, the projections of the position M in the three-dimensional space are assumed to be positioned at the coordinates $m_1$ and $m_2$ in. each image. The direction of the feature point from the viewpoint o' of the second camera coordinate system is depicted with a vector $m_2$ with respect to the second camera coordinate. However, the second camera coordinate was produced by giving rotation matrix R to the first camera coordinate system. Therefore, the direction of the feature point from the viewpoint o' is depicted with $Rm_2$ with respect to the first camera coordinate system, wherein formula 6 is obtained.

[Formula 6]

$$Zm_1 = T + Z'Rm_2$$

The aforementioned distances Z and Z' are calculated in accordance with a formula 7.

[Formula 7]

$$Z = \frac{(T \times Rm_2, m \times Rm_2)}{\|m_1 \times Rm_2\|^2}, \qquad Z' = \frac{(T \times m_1, m_1 \times Rm_2)}{\|m_1 \times Rm_2\|^2}$$

As described above, the distances Z and Z' in the three-dimensional space can be restored depending on the coordinates $m_1$ and $m_2$ of the projections onto the respective images from the two different camera viewpoints. The aforementioned track is the set of points in the objective view. Therefore, the three-dimensional shape can be restored based upon the calculation in accordance with the formula 7 regarding all tracks.

As shown in FIG. 1, the dead reckoning system as the moving condition detecting means MC for detecting the moving state of the vehicle can be configured with at least one sensor for detecting the vehicle dynamic state such as the vehicle running speed, the steering condition, the vehicle turning condition and the like. According to the embodiments of the present invention, the dead reckoning system can be configured with the vehicle wheel speed sensor 7 and can be applied as the movable body information detecting means MB. In the foregoing manner, the object existing in the imaged region can be specified based upon the vehicle positions and postures at the first and second conditions, and the corresponding points identified between the specified images by extracting and tracking the feature points in the images shot by the camera 2 at the first and second conditions, wherein the three-dimensional coordinate in the imaged region can be estimated.

According to the embodiment of the present invention, the dead-reckoning system is constructed for detecting the vehicle state, i.e. the position and the direction (i.e., angle about the vertical axis) of the vehicle 1, based on the wheel speed signals detected by the vehicle wheel speed sensors 7. The movable body information detecting means MB is configured with the dead reckoning system.

Next, the following description will be given for explaining a method of detecting the condition of the vehicle 1 according to the embodiments of the present invention. As illustrated in FIG. 4, the position and the direction of the vehicle 1 may be defined with three variables (x, y, $\theta$). When the vehicle speed is defined as a vehicle speed V and the angular velocity of the vehicle 1 is defined as an angular velocity $\omega$, the following formula is established between the vehicle state, the vehicle speed, and the angular velocity. That is:

$$dx/dt = V \cdot \cos\theta,$$

$$dy/dt = V \cdot \sin\theta,$$

and

$$d\theta/dt = \omega.$$

Although the vehicle speed V and the angular velocity $\omega$ cannot be directly measured, these values can be determined using the wheel speed of the rear wheels on the right and left detected by the wheel speed sensors as follows. That is:

$$V = (Vrr + Vrl) / 2,$$

and

$$\omega = (Vrr - Vrl) / Lt,$$

wherein Vrr stands for the wheel speed of the rear right wheel and Vrl stands for the wheel speed of the rear left wheel, and Lt stands for a tread length of the vehicle.

According to the foregoing formulas, the vehicle state (x, y, θ) at a time t can be shown in the following manner when an initial value ($x_0$, $y_0$, $\theta_0$) when t equals to zero is determined.

$$x = x_0 + \int(dx / dt)dt$$

wherein ∫ is varied from t equal to zero to t equal to t (i.e., t =0 → t=t)

$$y = y_0 + \int(dy / dt)dt$$

wherein ∫ is varied from t equal to zero to t equal to t (i.e., t =0 → t=t)

$$\theta = \theta_0 + \int(d\theta / dt)dt$$

wherein ∫ is varied from t equal to zero to t equal to t (i.e., t =0 → t=t)

That is, the vehicle state (x, y, θ) will be determined as shown in a formula 8.

[Formula 8]

$$x = x_0 + \int_{t=0}^{t} \dot{x}dt$$

$$y = y_0 + \int_{t=0}^{t} \dot{y}dt$$

$$\theta = \theta_0 + \int_{t=0}^{t} \dot{\theta}dt$$

FIG. 5 shows the condition of the vehicle performing a turning movement on $X_0$-$Y_0$ plane (i.e., $Z_0$=0) pursuant to the three-dimensional coordinates ($X_0$, $Y_0$, $Z_0$). The positional relationship from a first vehicle condition determined by a first position (i.e., coordinates ($x_1$, $y_1$)) and a first direction (i.e., angle $\theta_1$) to a second vehicle condition determined by a second position (i.e., coordinates ($x_2$, $y_2$)) and a second direction (i.e., angle $\theta_2$) can thus be determined. Although the vehicle position (i.e., coordinates) and the direction (i.e., angle) are detected based on the detected wheel speed by the wheel speed sensors 7 for the rear wheels on the right and left, the position and direction of the vehicle 1 may be determined by use of the steering angle sensor 4, a yaw rate sensor (not shown), a distance sensor (not shown), or combinations of those. Although FIG. 5 shows the plain circle turning movement of the vehicle 1, the vehicle movement can be tracked in accordance with combination of plural arcs or direct lines based upon the above-described coordinates and directions of the vehicle 1.

Meanwhile, as illustrated in FIG. 6, the three-dimensional environment estimated by the three-dimensional coordinate estimating means TD is stored in a memory as a three-dimensional map denoted with broken lines with reference to the three-dimensional coordinates (X, Y, Z). There are the other vehicles which are not the own vehicle and shot by the camera 2, the obstacles, the buildings which are shot by the camera 2, and the like in the three-dimensional map. However, their illustrations are omitted. Three-dimensional maps are denoted with broke lines in FIGS. 7 through 11 as well. The three-dimensional coordinate in FIG. 5 is corresponded relative to the three-dimensional map. That is, the relative positional and postural relationship of the vehicle 1 to the surrounding environment is corrected by the information combining means CB. More particularly, the vehicle 1 illustrated in FIG. 5 is positioned in the three-dimensional map denoted with the broken lines in FIG. 6. Therefore, the position (coordinate) of the vehicle 1 and the posture, i.e. the direction (angle) of the vehicle 1 are specified in the three-dimensional map.

The specified view is created by the specified view creating means SV when a camera is assumed to have been oriented in a predetermined direction on the vehicle 1 positioned at a predetermined point in the third-dimensional environment containing the environment around the vehicle 1. An image of the view shot by this virtual camera is displayed in the monitor 8 as the displaying means VD. FIG. 7 shows which region is contained in a view shot by the virtual camera 2a in accordance with the third-dimensional map with the vehicle 1 after moving. In other words, a region denoted with Sa in FIG. 7 is contained in the view shot by the virtual camera 2 and is displayed as a virtual image in the monitor 8. Hereinafter, the region displayed in the monitor 8 is referred to as a displayed view.

FIG. 8 shows displayed views Sb and Sc contained in views shot by a virtual camera 2b mounted at a front left corner of the vehicle 1 and by a virtual camera 2c mounted at a rear left corner thereof in accordance with the third-dimensional map with the vehicle 1 after moving. In the same manner, FIG. 9 shows a displayed view Sd contained in a view shot by a virtual camera 2d in accordance with the third-dimensional map with the vehicle 1 after moving.

The angles photographed by the cameras illustrated in FIGS. 7, 8, and 9 are designed to be substantially similar to the angle shot by the actual camera 2. Alternatively, as illustrated in FIG. 10, a virtual camera 2e can be mounted on the vehicle 1 so as to set a displayed view Se at 180 degrees. Therefore, the monitor 8 can display a virtual image which also contains views around the left and right corners which can not be shot by the actual camera 2. Further, as illustrated in FIG. 11, a virtual camera 2f can be mounted above the vehicle 1 so as to set a displayed view Sf at 360 degrees. The monitor 8 can display a virtual image containing this view shot by the virtual camera 2f.

The above-described virtual image varies depending on the movement of the vehicle 1, i.e. depending on shifting of the view in response to the movement of the virtual cameras. According to the embodiments of the present invention, the monitor 8 can display a virtual image containing the obstacle shot during the vehicle movement when needed. For example, as illustrated in FIG. 12, when the vehicle 1 is located at a position denoted with double dashed lines, the obstacle OB appears in a region Sp denoted with double dashed lines, wherein the monitor 8 displays an image containing the obstacle OB. Once the vehicle 1 is moved from the aforementioned position in an arrow direction down to a position denoted with a solid line, the obstacle OB disappears in a region Sn denoted with a solid line, wherein the displayed image in the monitor 8 does not contain the obstacle OB. In response to further movement of the vehicle 1 in the arrow direction from the position denoted with the solid line, the obstacle OB approaches to a portion between the rear left corner of the vehicle 1 and the front left thereof. In this case, the obstacle OB deviates from a view which can be shot by the camera 2, wherein the monitor 8 may not display the obstacle approaching to the vehicle 1.

Under the above-described condition between the vehicle 1 and the obstacle OB, if the virtual view shot by the virtual camera 2e above the vehicle 1 is displayed in the monitor 8, the displayed image can contain both corners of the vehicle 1 as illustrated in FIGS. 13 and 14. As illustrated in FIG. 13, a relative position of the obstacle OB to the vehicle 1 is shifted in an arrow direction illustrated in FIG. 14 from the position denoted with the double dashed lines. The obstacle OB is then illustrated with a solid line. As described above, even if the obstacle OB deviates from an actual view shot by the actual camera 2, the driver can recognize the position of the obstacle OB through the screen of the monitor 8.

According to the embodiment of the present invention, the instruction inputting means IS and the switching means SW switches an image to be displayed in the monitor 8 between the image actually shot by the actual camera 2 and a virtual image such as the images illustrated in FIGS. 13 and 14. More particularly, as illustrated in FIG. 15, the monitor 8 possesses a displayed screen (A) which shows not only the image (not shown) of the rear view of the vehicle 1 but also touch panel switches indicating "Left corner" and "Right corner". For example, when the driver or user touches the touch panel switch for the left corner shown in the displayed screen (A), the displayed screen (A) is switched to a screen (B) which zooms the left corner of the vehicle 1. In this case, the driver can easily recognize the obstacle OB approaching to the left corner of the vehicle 1. As described above, it is preferable that the portion of the vehicle 1 is zoomed in the monitor 8 as the driver intends. Alternatively, the display illustrated in FIG. 13 can be moved from side to side or can be auditorily warned about the obstacle OB approaching to the vehicle 1.

FIG. 12 illustrates a condition that the obstacle OB appearing in the region Sp prior to the rearward movement of the vehicle 1 disappears in the region Sn which is displayed in the image after the rearward movement of the vehicle 1. FIGS. 13 and 14 illustrates each condition of the obstacle OB. In the meantime, as illustrated in FIG. 16, when the vehicle 1 moves forward from the condition in which the obstacle OB appears at the side of the vehicle 1, the obstacle OB which did not appear first in the region Sp gradually appears in the region sn, wherein the obstacle OB eventually appears near the vehicle 1. In this case, an image captured by a side camera 2x assembled at a side mirror as a non-limiting example can be combined with the image captured by a camera mounted at a rear portion of the vehicle 1 as a non-limiting example so as to become a virtual image. Therefore, it is preferable that the virtual image by the virtual camera 2e above the vehicle 1 illustrated in FIG. 11 is displayed in the monitor 8 as well as the virtual image created with the images by the side camera 2x and the camera 2. For example, as illustrated in FIG. 17, the obstacle OB appearing in the view captured by the side camera 2x which is illustrated with broken lines in FIG. 16 can be displayed as the virtual image in the monitor 8. That is, each image in FIG. 17 and 18 is created with a direct view captured by the camera 2 and a combined view by the side camera 2x. The obstacle OB in the combined view is shifted to the direct view illustrated in FIG. 18. Therefore, the driver can recognize the presence of the obstacle OB since when the obstacle OB exists at the side of the vehicle 1. Blind corners of the cameras 2 and 2x prior to the vehicle movement can be hence displayed as the virtual image.

As described above, the obstacle OB around the vehicle 1 can be recognized by the user, especially by the driver, in a three-dimensional environment. Optimizing this matter, according to the embodiment of the present invention, when the obstacle within easy reach from the vehicle 1 deviates from the view actually shot by the camera 2, the monitor 8 can automatically display environments outside the view by the camera 2 as a virtual image. For example, as illustrated in FIG. 19, when the vehicle 1 is parallel parked at the left-hand side of the road, the vehicle 1 is moved rearward and turned in an arrow direction, i.e. in a counterclockwise direction. In this case, the front left corner of the vehicle 1 may unfavorably become in contact with a rear portion of the other vehicle OV. In this case, when the obstacle detecting means OB is included in the movable body circumstance monitoring apparatus illustrated in FIG. 3, the other vehicle OV approaching to the vehicle 1 within the predetermined distance can be recognized as an obstacle. The specific view can be created by the specific view creating means SV so as to contain the vehicle OV. As described above, a virtual image including a front left corner portion of the vehicle 1 can be displayed or switchably selected in the monitor 8 as illustrated in FIG. 20 automatically or following the driver's intention.

As described above, the surrounding environment including the other vehicle OV is actually shot by the camera 2 when the vehicle 1 is moved rearward for the parallel parking after forward moving in a region illustrated in FIG. 19. The information of the surrounding environment including the other vehicle OV has been stored as a third-dimensional environment map in the memory (not shown). Therefore, the position (coordinate) and posture (direction) of the vehicle 1 can be specified in the three-dimensional environment map. When a distance between the front left corner portion of the vehicle 1 and the rear portion of the other vehicle OV is judged to be less than a predetermined distance, the virtual image shown in FIG. 20 can be automatically displayed in the monitor 8. The driver can be auditorily alarmed at the same time as the display in the monitor 8. Further, when the electronic control unit 10 judges that the vehicle 1 may become in contact with the other vehicle OV, a warning notice can be displayed in the monitor 8 with some alarm. Still further, when other obstacle such as the other vehicle OV is detected to be located within a region at a predetermined distance away from the own vehicle, a virtual image containing the obstacle can be automatically displayed in the monitor 8. In this case, the driver also can be auditorily warned.

Following description will be given for explaining the alerting means AL illustrated in FIG. 1 based upon the closest distance between the vehicle 1 and the obstacle OB (e.g. the other vehicle OV) determined as described above. According to the embodiment of the present invention, the closest distance between the vehicle 1 and the obstacle is explained by use of a bar graph 8b in the monitor screen. The bar graph 8b is adjusted depending on the distance between the vehicle 1 and the obstacle OB. When the shortest distance is reduced, the shadowed portion of the bar graph 8b goes down. The monitor screen can directly display a mileage of the shortest distance instead of the bar graph 8b.

Further, as illustrated in FIGS. 21 and 22, the portion subject for determining the closest distance, i.e. the portion which may impact with the vehicle 1 moving under the current condition, can be marked with a marker 8c in the monitor 8. Still further, a caution 8d can be displayed in the monitor screen. When the apparatus is provided with the audio device AD illustrated in FIG. 1, the user can be warned by a voice or a beep sound depending on the value expressing the shortest distance. The alerting means AL can be configured with a single device or with their combinations.

As illustrated in FIG. 23, a virtual image can be applicable just in case for warning. The monitor 8 displays the bar graph 8b and the marker 8c as well as a portion of the vehicle 1 as the own vehicle and a graphics representing the obstacle OB. For example, the rear portion of the vehicle 1 is illustrated in FIG. 23. Therefore, the user can recognize the relationship between the vehicle 1 and the obstacle OB. It is further preferable that the positional relationship therebetween is alerted along with the caution 8d, the voice, the beep sound, and the like.

Next, the following explanation will be given for describing an example of operation for parallel parking by the parking guide system with the above-described structure with reference to FIGS. 2 and 24. As illustrated in FIG. 24, when the vehicle 1 is supposed to be parallel parked at the left-hand side along the forward moving direction thereof, a region where the vehicle 1 can be parked is judged for example as described hereinbelow.

First of all, the driver shifts the shift lever 5 to a reverse range after stopping the vehicle 1 ahead of the parking space on the right. At this point, the parking space has been assumed to be a place in which the vehicle 1 can be parked. According to the embodiment of the present invention, the electronic control unit 109 calculates a vehicle speed based upon the signal outputted from the vehicle wheel speed sensors 7. When the vehicle speed is judged to be less than a predetermined speed value and when the shift lever 5 is judged to have been at the reverse range based upon the signal outputted from the shift lever switch 6, the electronic control unit 10 judges that the driver intends to park the vehicle 1 in the parking space.

Under the above condition, the rear view of the vehicle 1 has been obtained by the camera 2. That is, the vehicle 1 illustrated in FIG. 5 is arranged in the three-dimensional environment map denoted with the broken lines in FIG. 6. Therefore, the coordinate and angle of the vehicle 1 can be specified in the map. The electronic control unit 10 can judge whether a region possessing a predetermined size or greater than that, i.e. a region possessing a predetermined area or greater than that. For example, when the three-dimensional map illustrated in FIG. 6 is viewed from the above, the region is defined to be a rectangular space possessing a longitudinal length being greater than a vehicle entire longitudinal length and a lateral length being greater than a vehicle entire lateral length. Further, the vehicle 1 can be judged whether the vehicle 1 can be parked in the region based upon the judgment result of an obstacle in the region. When the vehicle 1 is judged to be able to be parked at plural regions, an optimal region can be selected among the plural regions based upon the predetermined reference such as the moving distance from the vehicle parking start potion to the vehicle parking end position, time required for parking, number of steering wheel turns, and steering angle of the steering wheel. Although an optimal region can be displayed in the monitor 8, the display will be omitted now. The driver can be alerted only about whether there is a region for parking.

In the foregoing manners, the driver turns the steering wheel 3 in one direction following the guide of the monitor 8 from the vehicle stationary condition, wherein the vehicle is turned rearward maintaining the steering angle of the turned steering wheel 3. The vehicle is then stopped again and is turned rearward maintaining the steering angle of the steering wheel 3 turned in an opposite direction. Symbols A through I divide a serial parallel parking operation by the driver. According to the embodiment of the present invention, processing may be changed depending on the parallel parking at each position as being explained in FIGS. 26 and 28.

The following description will be given for explaining a recommended course which is actually tracked upon parking the vehicle at a target parking space which was selected as an optical region when the vehicle speed of the vehicle 1 is less than the predetermined speed value. FIG. 25 illustrates a recommended course for the parallel parking. More particularly, FIG. 25 illustrates a track S which a midpoint of a rear wheel axis passes through, a start point P0 at which the midpoint thereof is positioned for example when the shift lever 5 was shifted to the reverse range by the driver for the parallel parking, and an end point P1 at which the midpoint thereof is positioned for example when the parking is completed. Further, the vehicle 1 upon the shift change to the reverse shift is not always required to be oriented in a parallel manner relative to the vehicle 1 being parked in the parking space.

A passing point P2 in FIG. 25 represent the midpoint of the rear wheel axis when the vehicle 1 starts turning and is defined as described below. First of all, the parking space is defined as a rectangular of which lateral length is a predetermined distance W being greater than a lateral length of the vehicle 1 and of which longitudinal length is a distance L. The left side of the parking space is located at the left side of the vehicle 1, and the rear end of the parking space is located rearward with a distance D from the rear wheel axis of the vehicle 1. A direct line ml is defined to be parallel to a direction or posture of the vehicle 1 which is almost started to be parked.

According to the embodiment of the present invention, both of the start point P0 and the passing point P2 pass through the direct line ml in order to move rearward the vehicle 1 to a vehicle turning start point after the initial parallel parking operation. For example, when a front end of the vehicle parking space at the right side is represented with a point P3, an angle $\alpha$ is defined between a line segment (P2 - P3) and a vertical line from the point P3 to the direct line ml. Therefore, the point P2 can be determined under the condition that the angle $\alpha$ is a constant value, i.e. under the condition that a ration (d1/d2) of a distance d1 denoting a length of the vertical line extending from the point P3 to the direct line ml relative to a distance d2 extending between an intersecting point of the vertical line with the direct line ml and the point P2.

According to the embodiment of the present invention, the vehicle parking can be completed along with sequential two turning operations (i.e. a first turning operation and a second turning operation) after the start of the vehicle turning. When the steering angle upon the first turning operation is defined as the maximum steering angle, the moving track upon the first turning operation is drawn as an arc to be circumscribed with the moving track upon the second turning operation and to become in contact with the direct line ml on the passing point P2. In the foregoing manners, a radius R1 upon the first turning operation, a radius R2 upon the second turning operation, and a midpoint P4 of the rear wheel axis upon changing the turning direction of the steering wheel 3 are defined. The parking end position is defined when the shift leer is shifted to the reverse stage after the above two sequential turning operations.

Next, following description will be given for explaining an example of a process by the electronic control unit 10 for the parallel parking of the vehicle 1 with reference to FIGS. 26, 27, and 28. The symbols A through I cited at the left row of each figure correspond to the conditions A through I for each parking operation among the serial parking operation illustrated in FIG. 24. When the vehicle 1 is under the condition A, the vehicle 1 is decelerated to be parked ahead of the parking space at the right side. More particularly, the parallel parking of the vehicle 1 is prepared based upon the image obtained by the camera 2 and the restored three-dimensional environment when the vehicle speed calculated based upon the signal outputted from the vehicle wheel speed sensors 7 is less than the predetermined speed value. According to the embodiment of the present invention, the electronic control unit 10 is designed to judge that the driver does not intend to park the vehicle 1 yet. Therefore, the vehicle 1 is not guided based upon a voice or a displayed image. Alternatively, the vehicle 1 can be guided based upon the voice or the displayed image in the monitor 8.

When the vehicle 1 is moved forward from the condition A for a while, the vehicle 1 is stopped along with the shift change of the shift lever 5 to the reverse shift stage, wherein the vehicle 1 is shifted to the condition B. The electronic control unit 10 judges that the driver intends to park the vehicle 1. The parking guidance is started with the voice guidance or the displayed image in the monitor 8. The monitor 8 displays the view obtained by the camera 2. When the vehicle 1 is under the condition B, the electronic control unit 10 judges whether there is a parking space at which the vehicle 1 can be parked. As explained in FIG. 26, the driver can be alerted whether there is the parking space around the vehicle 1 with the voice and with a message displayed at the bottom portion of the monitor screen. When the electronic control unit 10 judges that there is the parking space around the vehicle 1, the parking space is displayed in the monitor screen. Therefore, the driver can recognize the parking space at which the vehicle 1 can be parked.

When the electronic control unit 10 judges that there is the parking space around the vehicle 1, the vehicle 1 is shifted to the condition C. After calculation of the recommended course for the parallel parking of the vehicle 1, the vehicle is guided to move rearward by the voice and the message displayed in the monitor screen. The driver can follow the guidance so as to move the vehicle rearward with the steering wheel 3 maintained at a steering angle for a forward straight movement. The electronic control unit 10 calculates a distance between the vehicle 1 upon the rearward movement and the first turning start position based upon the signal detected by the vehicle wheel speed sensor 7. The distance is displayed with a bar graph in the monitor screen, wherein the bar graph varies depending on the distance therebetween. Further or alternatively, the distance can be warned with a warning sound from a speaker 9 (or a buzzer), wherein the warning sound varies depending on the distance therebetween. When the vehicle 1 closely approaches to the first turning start position, the vehicle 1 is guided to stop by the message in the monitor screen and / or with the voice.

When the vehicle speed becomes less than the predetermined speed value, the vehicle ,1 is judged to have stopped, wherein the vehicle 1 is shifted to the condition D. The driver then turns the steering wheel 3 so as to match the current steering angle to a target steering angle following the voice guidance and the displayed guidance. At this point, the monitor 8 displays an expected course line denoting a track of rear left and right wheels based upon the current steering angle and a target course line denoting a track of the rear left and right wheels turned with the turning radius R1, both of which are referred to as references for adjusting the steering angle. When a difference between the current steering angle and the target steering angle becomes less than a predetermined value, the driver is announced by a message in the monitor screen and the voice guidance that the expected course line has matched with the target course line. The driver is then guided with the voice message to move the vehicle 1 rearward with the steering wheel 3 maintained at the steering angle.

When the vehicle 1 is initially moving rearward, the vehicle 1 is shifted to the condition E. The driver moves the vehicle 1 rearward down to a position to turn the steering wheel 3 in the opposite turning direction maintaining the steering wheel 3 at the steering angle. The position to turn the steering wheel 3 in the opposite turning direction is hereinafter referred to as a turning direction switching position. While the vehicle 1 is moving rearward to the turning direction switching position, the distance relative to the turning direction switching position is expressed by a gar graph displayed in the monitor 8 and a warning sound. That is, the distance to the turning direction switching position is calculated and is expressed by the bar graph displayed in the monitor 8, wherein the bar graph varies depending on the distance. Further, the distance is expressed by the warning sound outputted from the speaker 9 (or the buzzer), wherein the warning sound varies depending on the distance. When the distance to the turning direction switching position becomes less than a predetermined value, the driver is announced to stop the rearward movement of the vehicle 1 with the voice message and the message displayed in the monitor 8. Further, when the vehicle speed becomes less than the predetermined speed value, the electronic control unit 10 judges that the vehicle 1 was stopped at the turning direction switching position such that the driver is guided to turn the steering wheel 3 in the opposite turning direction with the voice guidance..

When the vehicle 1 is turned rearward to the condition F, the driver operates the steering wheel 3 so as to match a current steering angle with a target steering angle following the voice guidance and the displayed image. At this point, the monitor 8 displays an expected course line denoting a track of the rear left and right wheels with the turning radius R2 and a target course line denoting a track of the rear left and right wheels of the vehicle turning with the turning radius R2, both of which are referred to references for adjusting the steering angle. When a difference between the current steering angle and the target steering angle becomes less than a predetermined value, the driver is announced with the voice message and the displayed message in the monitor screen that the expected course line has matched with the target course line. The driver is then guided with the voice message to move the vehicle 1 rearward maintaining the steering wheel 3 at the steering angle.

In this case, when there is the other vehicle appearing ahead of the own vehicle at the left side, the vehicle is shifted to the condition G. The driver is guided with the voice message and the message displayed in the monitor screen to adjust the steering angle of the steering wheel 3 or to decelerate the vehicle 1 in order to prevent a front left portion of the own vehicle from impacting with the other vehicle appearing ahead the own vehicle at the left side. That is, with reference to FIGS. 19 and 20, the monitor 8 displays the virtual image including the front left portion of the own vehicle and vicinity thereof, wherein the driver can judge by referring to the displayed virtual image whether the own vehicle may impact with the other vehicle ahead the own vehicle at the left side. The distance between the front left portion of the own vehicle and the other vehicle ahead the own vehicle at the left side can be determined based upon the own vehicle position calculated based upon the signal outputted from the vehicle wheel speed sensor 7 and the image obtained by the camera 2.

When the distance between the own vehicle and the other vehicle behind the own vehicle becomes less than a predetermined value, the vehicle 1 is shifted to the condition H. The driver moves the vehicle 1 rearward following the voice guidance and the displayed guidance in the monitor 8. The distance therebetween is depicted by the bar graph illustrated in FIG. 21, wherein the bar graph varies depending on the signal outputted from the vehicle wheel speed sensors 7 and the image captured by the camera 2. The distance therebetween is also announced by the warning sound, wherein the warning sound varies depending thereon. When the distance between the own vehicle and the other vehicle behind the own vehicle becomes less than a predetermined value, the vehicle 1 shifts to the condition 1. The driver is guided to park the vehicle 1 by the voice message and the message displayed in the monitor 8. The vehicle 1 can be judged to have stopped when the vehicle speed is less than the predetermined speed value. After parking the vehicle 1, the driver is guided by the voice or the displayed message to return the steering wheel 3 to an original position, wherein the vehicle parking operation is terminated.

In the foregoing manners, according to the embodiment of the present invention, the parking space is searched from the position at which the driver is judged to have asked for information about whether there is a parking space to park the own vehicle. The driver is announced by a voice whether or not there is the parking space around there. When the electronic control unit 10 judges that there is a parking space, the parking space is displayed in the monitor screen along with the image captured by the camera 2. Therefore, the movable body circumstance monitoring apparatus according to the embodiment of the present invention can accurately assist the driver to find out the parking space for parking the own vehicle.

According to the embodiment of the present invention, a recommended course for parking the vehicle 1 is calculated based upon the positional relationship between the parking start position and the parking end position both of which are obtained by the constructed three-dimensional environment. The driver is guided to park the vehicle in response to the recommended course. Therefore, the vehicle can be parked along the recommended course which was appropriately determined. Especially, while the vehicle is turning to be parked at the parking space, the monitor 8 displays a recommended course for parallel parking and an expected course based upon a current steering angle of the steering wheel. In this case, the driver can be acknowledged by the voice and the monitor displayed image that the vehicle 1 is not moving along the recommended course when a deviation between a recommended steering angle and the current steering angle is calculated. As a result, the driver can appropriately recognize whether the vehicle 1 has been appropriately driven to be parallel parked.

According to the embodiment of the present invention, the three-dimensional environment around the vehicle 1 has been stored based upon the image obtained by the camera 2. When an obstacle such as the other vehicle is approaching to vicinity of the own vehicle corner, the virtual image containing the vicinity of the own vehicle corner can be displayed in the monitor 8, wherein the driver can be alerted in advance that the own vehicle may impact with the other vehicle upon being parked. Further, according to the embodiment of the present invention, a distance from the current position of the vehicle 1 to a target position or a distance to an obstacle can be calculated based upon the three-dimensional environment around the vehicle 1 constructed based upon the image obtained by the camera 2 or the signal outputted from the vehicle wheel speed sensors 7. The calculated distance is depicted by use of the bar graph in the monitor screen. Therefore, the vehicle 1 can be moved at an appropriate distance by the driver so as not to be impacted with the obstacle.

Still further, according to the embodiment of the present invention, the above description is applied for the parallel parking of the vehicle at the parking space at the left side along the vehicle forward moving direction. However, a parallel parking of the vehicle at a parking space at the right side along the vehicle forward moving direction can be performed in the same manner as described above. Further, the vehicle 1 is provided with the one camera 2. However, the vehicle 1 can be provided with plural cameras to monitor the circumstance surrounding the vehicle 1. Still further, the three-dimensional environment according to the embodiment of the present invention is restored by use of the images by the camera which were obtained prior to the vehicle movement and after the vehicle movement. Alternatively, the three-dimensional environment can be restored by use of plural cameras mounted on the vehicle 1. In this case, even when the vehicle 1 has been at a stationary state, the three-dimensional environment can be restored.

The substantially same or similar effects as the above-described embodiment can be generated even if following various modifications are applied to the embodiment of the present invention. According to the above embodiment, the driver is judged to have intended to park the vehicle in response to the shift operation of the shift lever 5 to the reverse stage. Alternatively, when the vehicle has a switch (not shown) for starting parking guidance in a vehicle interior, the driver can be judged to have intended to park the vehicle in response to on operation of the switch.

According to the above embodiment, the vehicle position and speed is calculated based upon the signal outputted from the vehicle wheel speed sensor 7. Alternatively, the vehicle position and speed can be calculated by use of at least either a yaw rate sensor (not shown) or the steering angle sensor 4 in substitution for the vehicle wheel speed sensor 7. Still alternatively, the vehicle position and speed can be calculated by use of combinations of the yaw rate sensor, the steering angle sensor, and the vehicle wheel speed sensor 7.

According to the above described embodiment, when the vehicle parallel parking is performed, the driver drives the vehicle to be parallel parked with reference to the displayed image including the camera image and the recommended course or the virtual image containing the vicinity of the vehicle corner. Alternatively, the monitor 8 can display an image including the virtual image containing the vicinity of the vehicle corner and the recommended course. According to the above embodiment, the vehicle 1 is provided with the one monitor 8 which can switch the camera image and the virtual image as occasion arises. Alternatively, the vehicle 1 can be provided with plural monitors that respectively display the camera image and the virtual image. In this case, the driver can be supplied with more information through these plural monitors.

According to the above described embodiment, while the vehicle 1 has been moved rearward prior to the completion of the parking operation, the distance between the vehicle and the obstacle obtained based upon the constructed three-dimensional environment is depicted by use of the bar graph in the monitor screen. Alternatively, the distance between the vehicle and a predetermined vehicle parking end position can be depicted by use of the bar graph. According to the above embodiment, the parking end position is automatically determined based upon the three-dimensional environment. Alternatively, a parking region can be first roughly calculated based upon the three-dimensional environment. In this case, the driver can uninhibitedly determine the target parking position by use of the steering wheel 3, a joint bar (not shown)

According to the above embodiment, the electronic control unit 10 determines only one recommended course for the vehicle parking. Although plural recommended courses can be set for the vehicle parking, it will be enough as far as a recommended course has been set from the parking start position to the parking end position. According to the above embodiment, the steering wheel 3 is turned twice for the vehicle parking. However, the vehicle can be parked only with one turning operation of the steering wheel 3 or with plural turning operations thereof.

According to the above embodiment, described is an example of a method of displaying in the monitor 8 or outputting a voice guidance. Alternatively, the guidance can be partially cancelled if the driver is skilled in the parking. Still alternatively, the driver can switch the parking guidance.

The above embodiment was described for assisting the parallel parking. However, it can be applied for assisting a vehicle garaging. Further, the above embodiment can be applied for automatically moving the vehicle to an appropriate parking space from a position where the driver is judged to have intended to park the vehicle.

The movable body according to the present invention is represented not only by the vehicle but also by a robot. Therefore, the present invention can be applied for automatically moving the robot to a predetermined space.

In light of foregoing, according to an aspect of the present invention, the movable body circumstance monitoring apparatus characterized in that the apparatus includes image capturing means mounted on a movable body for obtaining an image of surrounding of the movable body, three-dimensional environment constructing means for constructing a three-dimensional environment of the surrounding of the movable body based upon the image obtained by the image capturing means, and judging means for judging whether or not the surrounding of the movable body satisfies a predetermined condition based upon the three-dimensional environment constructed by the three-dimensional environment constructing mean). For example, the apparatus can search whether there is a region possessing a greater area than a vehicle and can determine whether the vehicle can be parked in the region. Therefore, the apparatus can automatically find a space at which the vehicle ban be parked, thereby enabling to reduce load for the driver.

The three-dimensional environment can be constructed by use of at least one image capturing device. Therefore, the apparatus can be manufactured at a reasonable manufacturing cost. When the moving condition detecting means is configured with a speed detecting device, the apparatus can be manufactured at a still better manufacturing cost. When the image capturing means is configured with plural image capturing devices, the three-dimensional environment can be easily constructed regarding vast view.

When the apparatus also includes the alerting means, the driver can get prepared when the environment around the movable body satisfies the predetermined condition. The alerting means can alert the driver with a . voice and or a display in the monitor such that the driver can be automatically alerted whether there is a parking region around there.

A movable body circumstance monitoring apparatus includes image capturing means mounted on a movable body for obtaining an image of surrounding of the movable body, three-dimensional environment constructing means for constructing a three-dimensional environment of the surrounding of the movable body based upon the image obtained by the image capturing means, and judging means for judging whether or not the surrounding of the movable body satisfies a predetermined condition based upon the three-dimensional environment constructed by the three-dimensional environment constructing means.

## Claims

**1.** A movable body circumstance monitoring apparatus **characterized in that** the apparatus comprises:

image capturing means (IC) mounted on a movable body for obtaining an image of surrounding of the movable body;
three-dimensional environment constructing means (TD) for constructing a three-dimensional environment of the surrounding of the movable body based upon the image obtained by the image capturing means (IC); and
judging means (JD) for judging whether or not the surrounding of the movable body satisfies a predetermined condition based upon the three-dimensional environment constructed by the three-dimensional environment constructing means (TD).

**2.** A movable body circumstance monitoring apparatus according to claim 1 **characterized in that** the apparatus further comprises:

moving condition detecting means (MC) for detecting moving condition of the movable body at least at a first position and a second position; and
at least one image capturing device (2) included in the image capturing means (IC) and mounted at a predetermined portion of the movable body, wherein the three-dimensional environment constructing means (TD) constructs the three-dimensional environment of the surrounding of the movable body based upon images obtained at least at the first and second positions of the movable body by the image capturing device (2).

**3.** A movable body circumstance monitoring apparatus according to claim 2, wherein the moving condition detecting means (MC) includes a speed detecting device for detecting a moving speed of the movable body, and a distance at least between the first and second positions of the movable body is determined based upon the result detected by the speed detecting device.

**4.** A movable body circumstance monitoring apparatus according to claim 1, wherein the image capturing means (IC) includes plural image capturing devices provided at least at two positions of the movable body with a predetermined distance therebetween, and the three-dimensional environment constructing means (TD) constructs the three-dimensional environment of the surrounding of the movable body based upon images obtained by the plural image capturing devices.

**5.** A movable body circumstance monitoring apparatus according to any preceding claim **characterized in that** the apparatus further comprises:

alerting means (AL) for alerting the result by the judging means (JD) when the judging means (JD) judges that the environment surrounding the movable body satisfies the predetermined condition.

**6.** A movable body circumstance monitoring apparatus according to claim 5, wherein the alerting means (AL) includes at least either a display device (DD) for displaying the result by the judging means (JD) or an audio device (AD) for transmitting the result by the judging means (JD) in an audio manner.

**7.** A movable body circumstance monitoring apparatus according to any preceding claim, wherein the judging means (JD) is a parking possibility determining means (PP) for determining that the predetermined condition is satisfied when the judging means (JD) judges that there is a region possessing a predetermined size in the surrounding of a vehicle and the vehicle can be park in the region when the movable body is the vehicle.

**8.** A movable body circumstance monitoring apparatus according to claim 7 **characterized in that** the apparatus further comprises:

region selecting means for selecting a region among plural regions based upon a predetermined reference for judging easiness for the vehicle parking when the parking possibility determining means (PP) determines that there are the plural regions possessing the predetermined size respectively.

**9.** A movable body circumstance monitoring apparatus according to claim 8, wherein the predetermined reference is at least one of a moving distance from a vehicle parking start position to a vehicle parking end position, a time required for the vehicle parking, number of steering wheel turns and steering ratio, and a size of the parking possible region.

FIG. 1

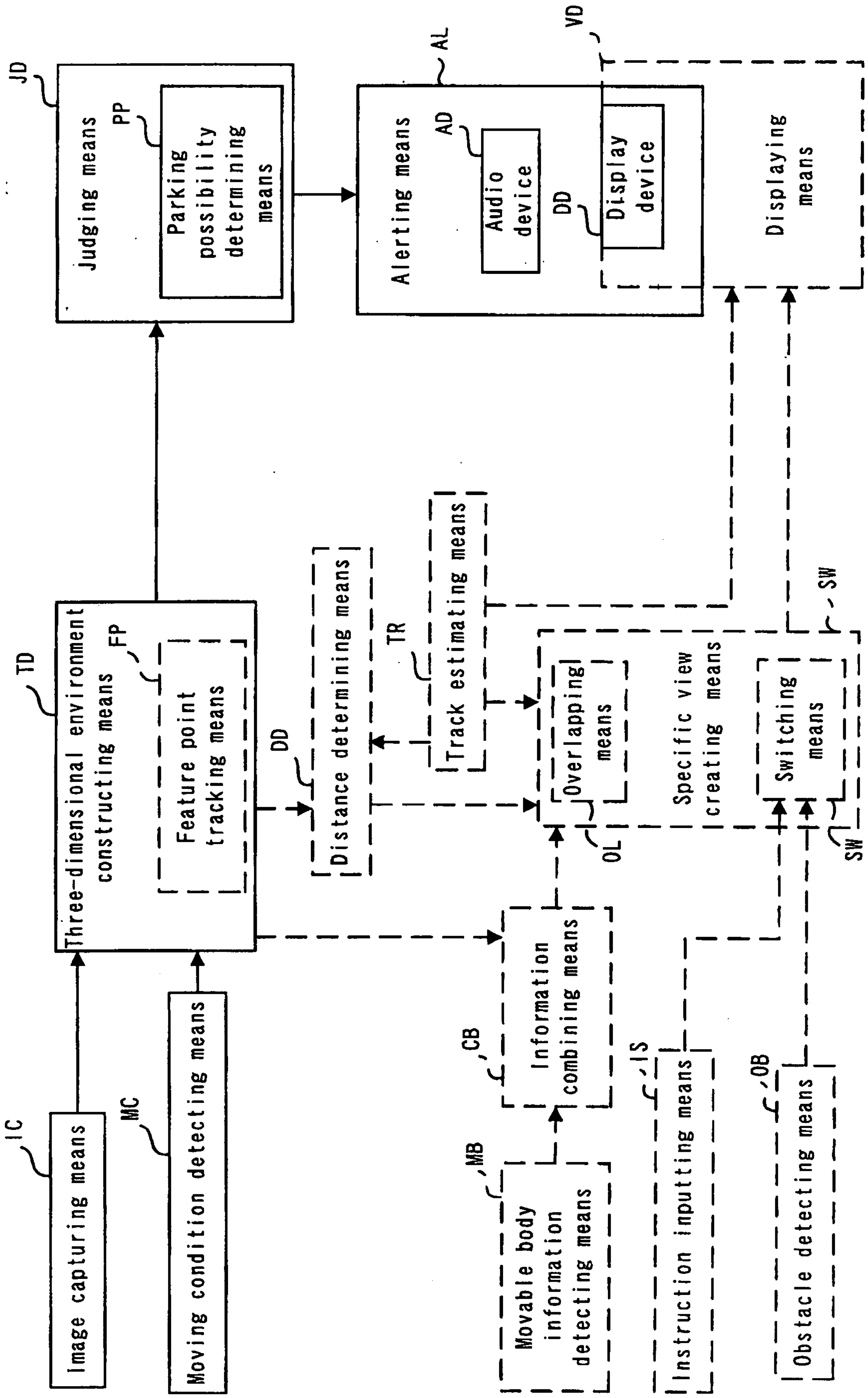
IC
Image capturing means
MC
Moving condition detecting means
TD
Three-dimensional environment constructing means
FP
Feature point tracking means
JD
Judging means
PP
Parking possibility determining means
AL
Alerting means
AD
Audio device
DD
Display device
VD
Displaying means
DD
Distance determining means
TR
Track estimating means
Specific view creating means
OL
Overlapping means
SW
Switching means
SW
CB
Information combining means
MB
Movable body information detecting means
IS
Instruction inputting means
OB
Obstacle detecting means

FIG. 2

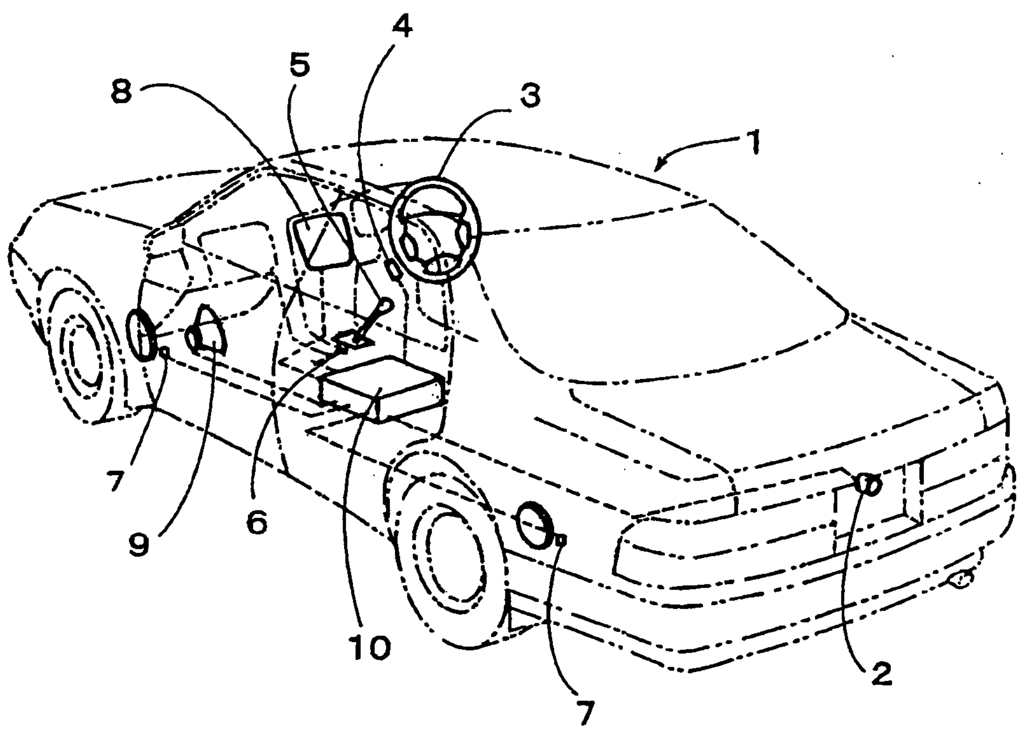

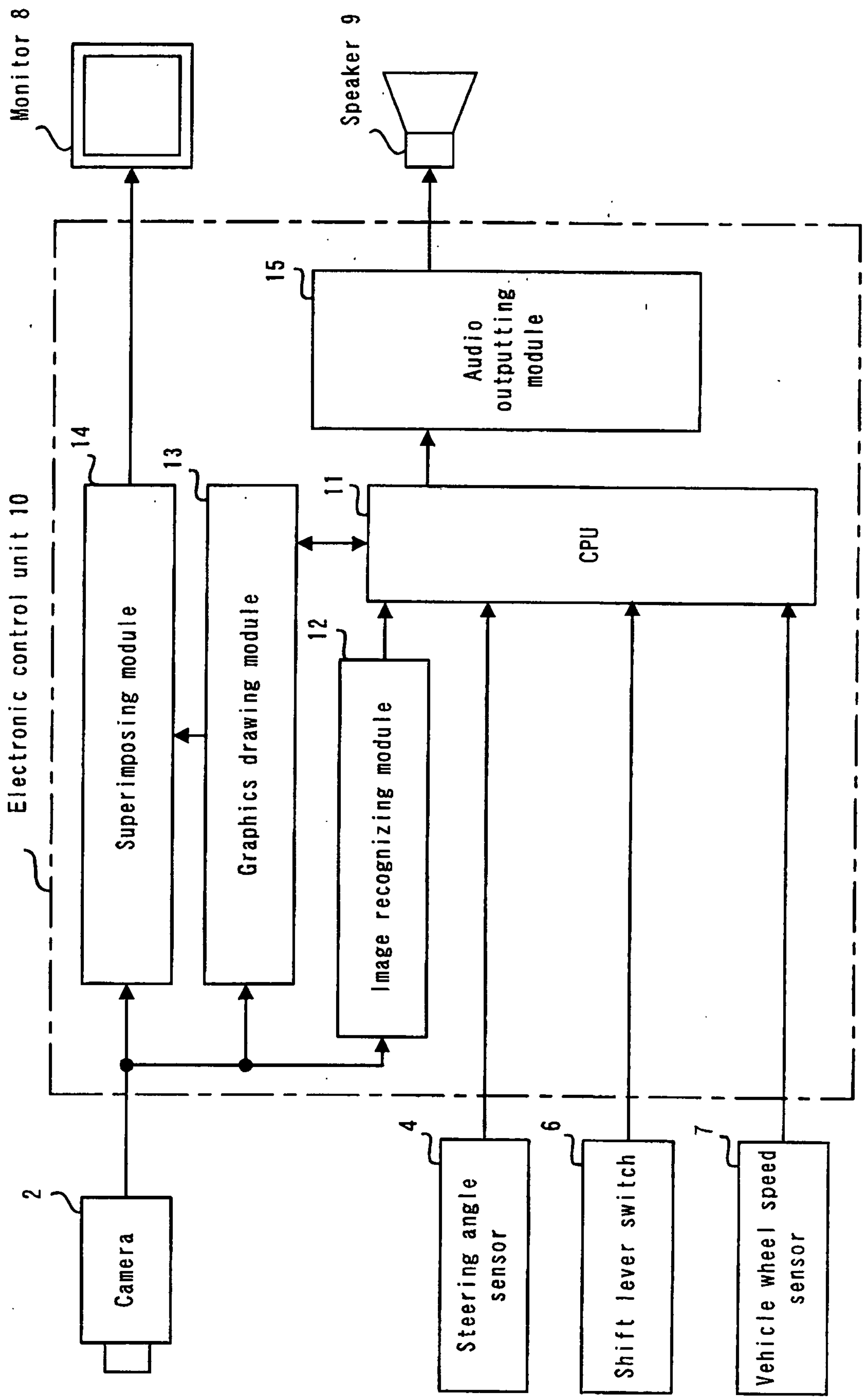
Monitor 8
Speaker 9
Electronic control unit 10
15
Audio outputting module
14
Superimposing module
13
Graphics drawing module
11
CPU
12
Image recognizing module
2
Camera
4
Steering angle sensor
6
Shift lever switch
7
Vehicle wheel speed sensor

FIG. 3

FIG. 4

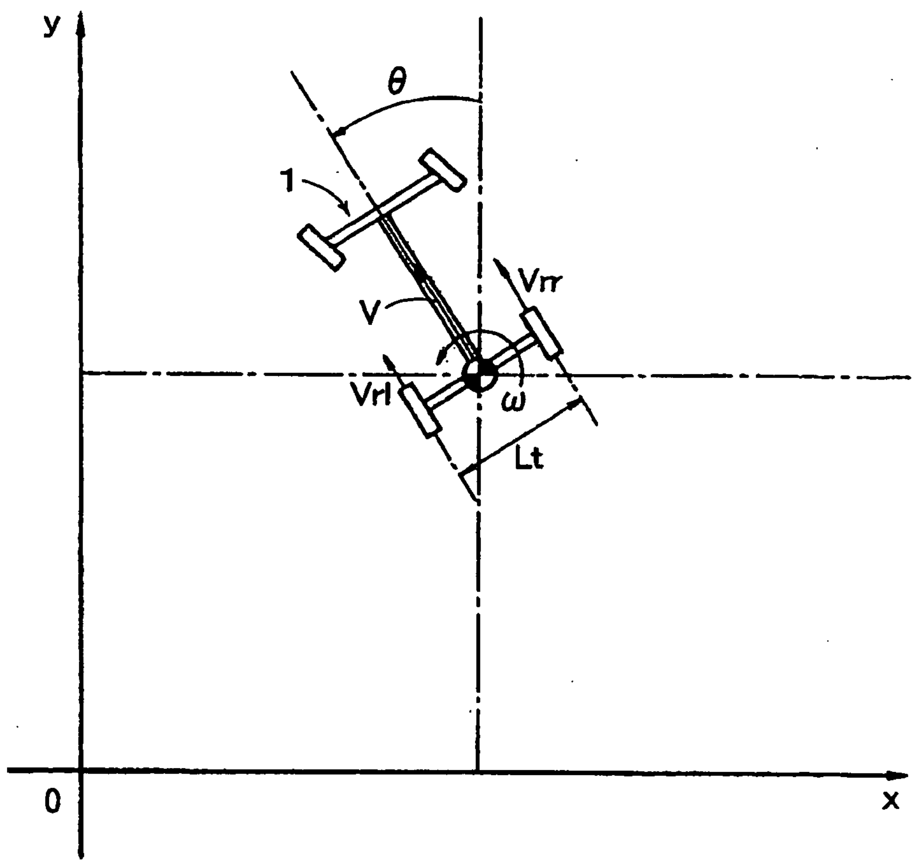

FIG. 5

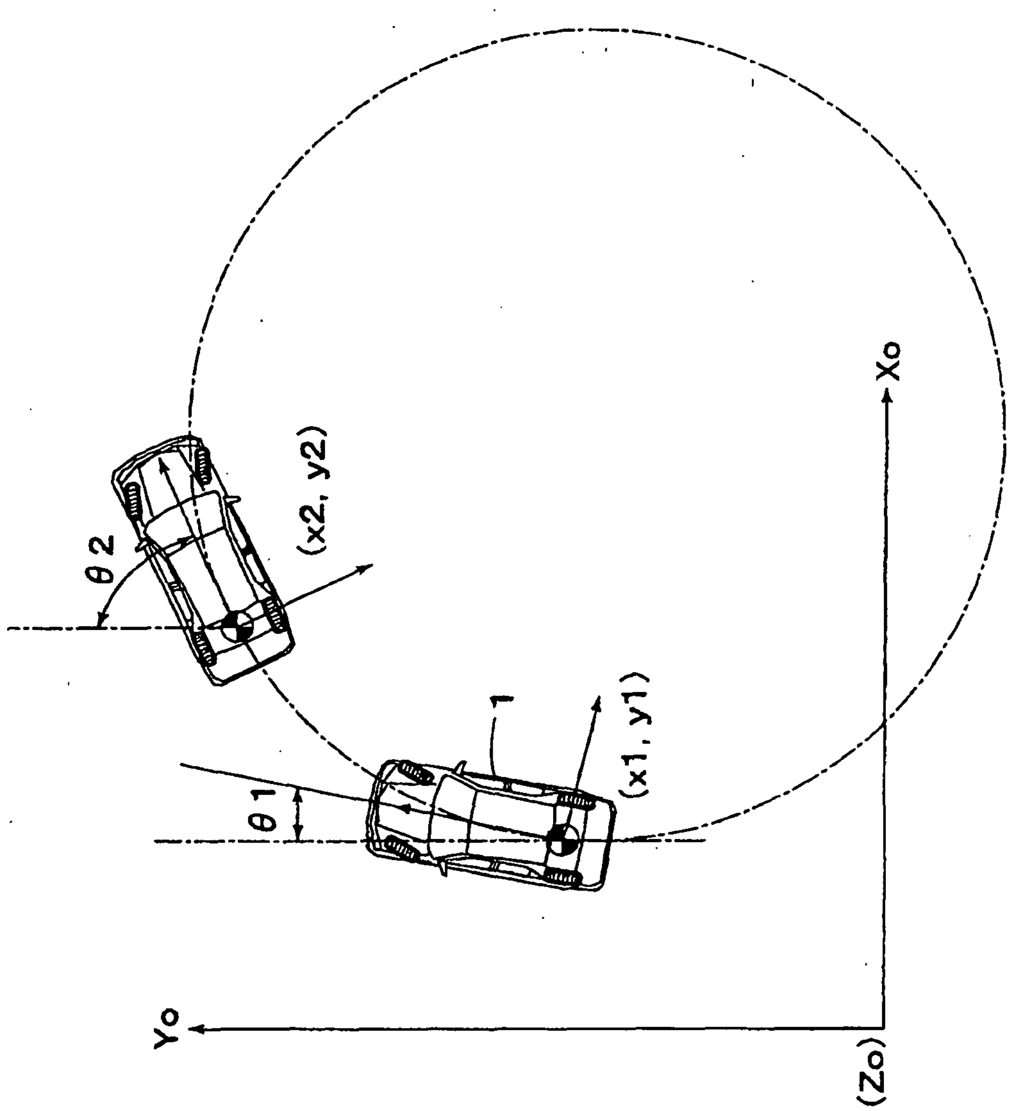

FIG. 6

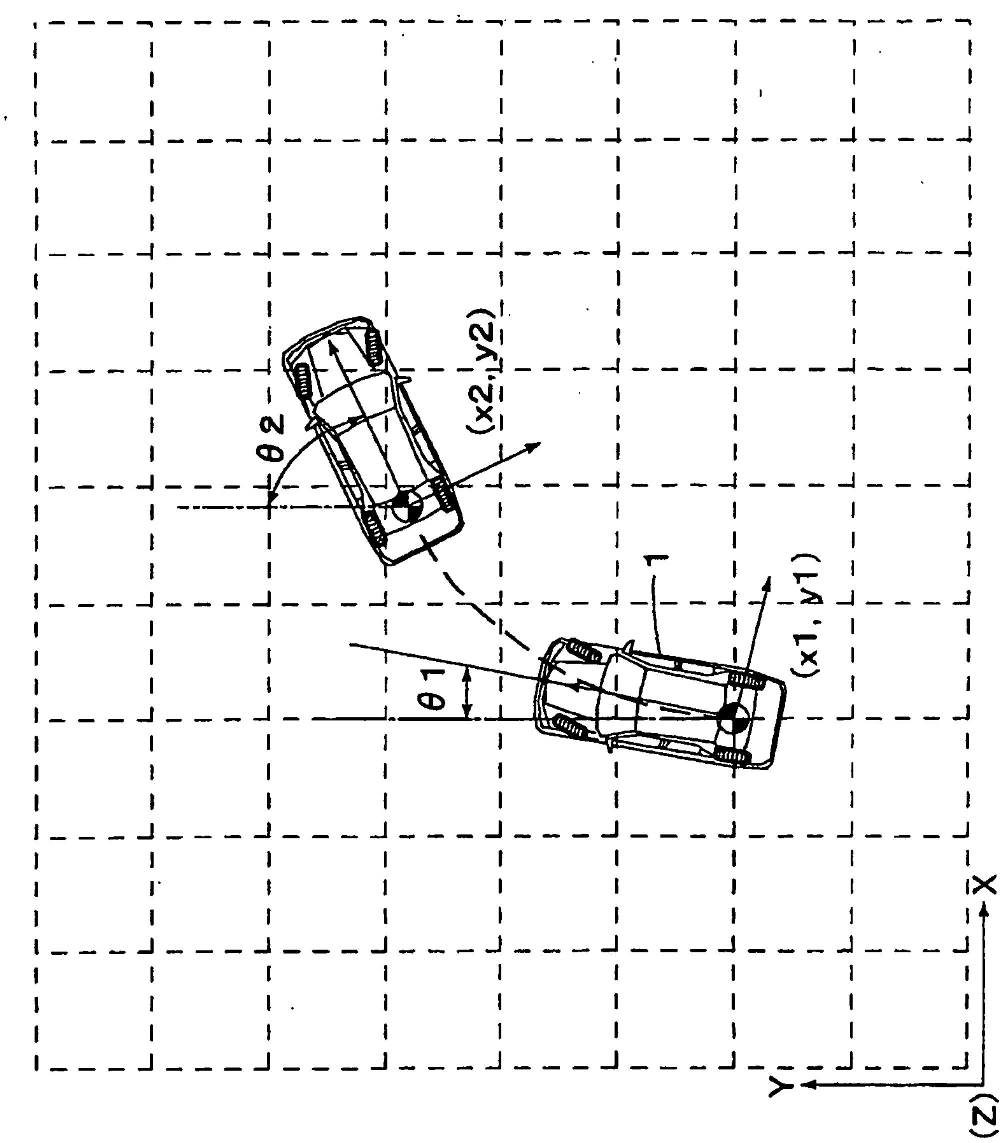

FIG. 7

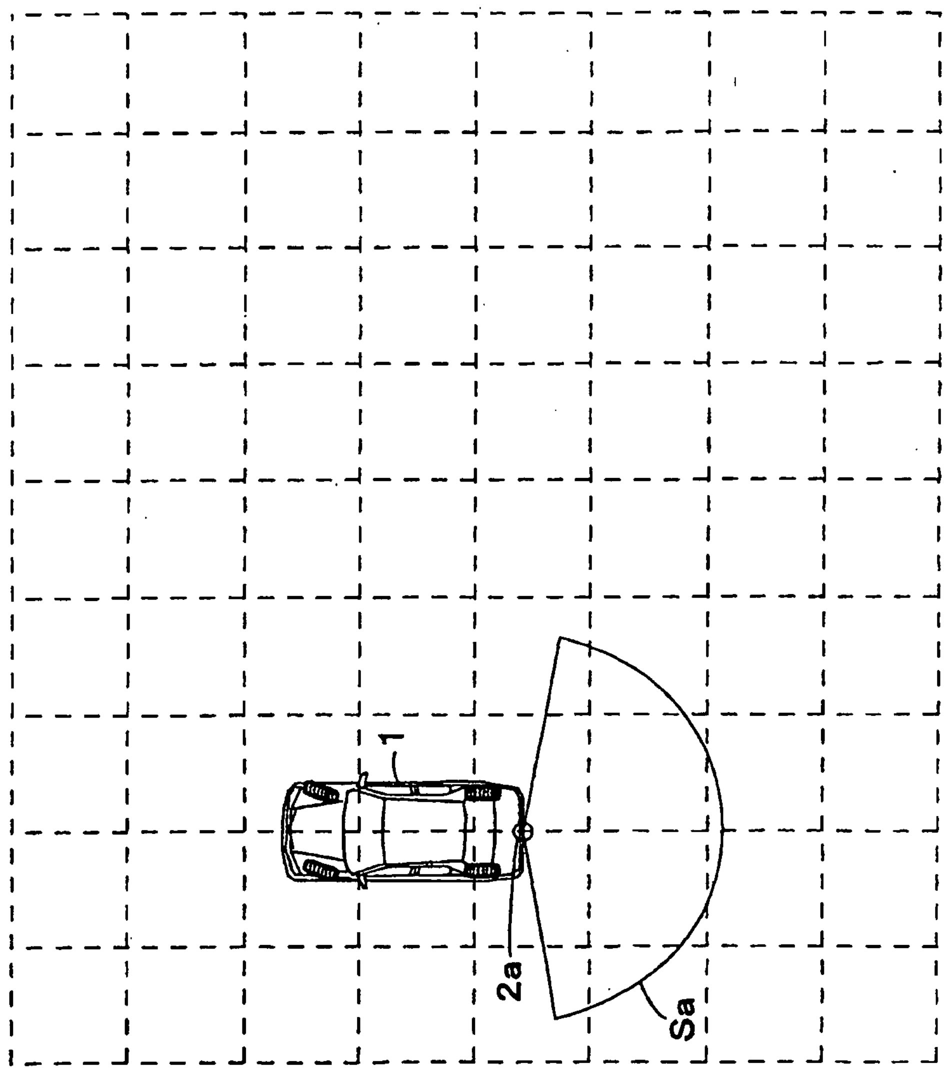

FIG. 8

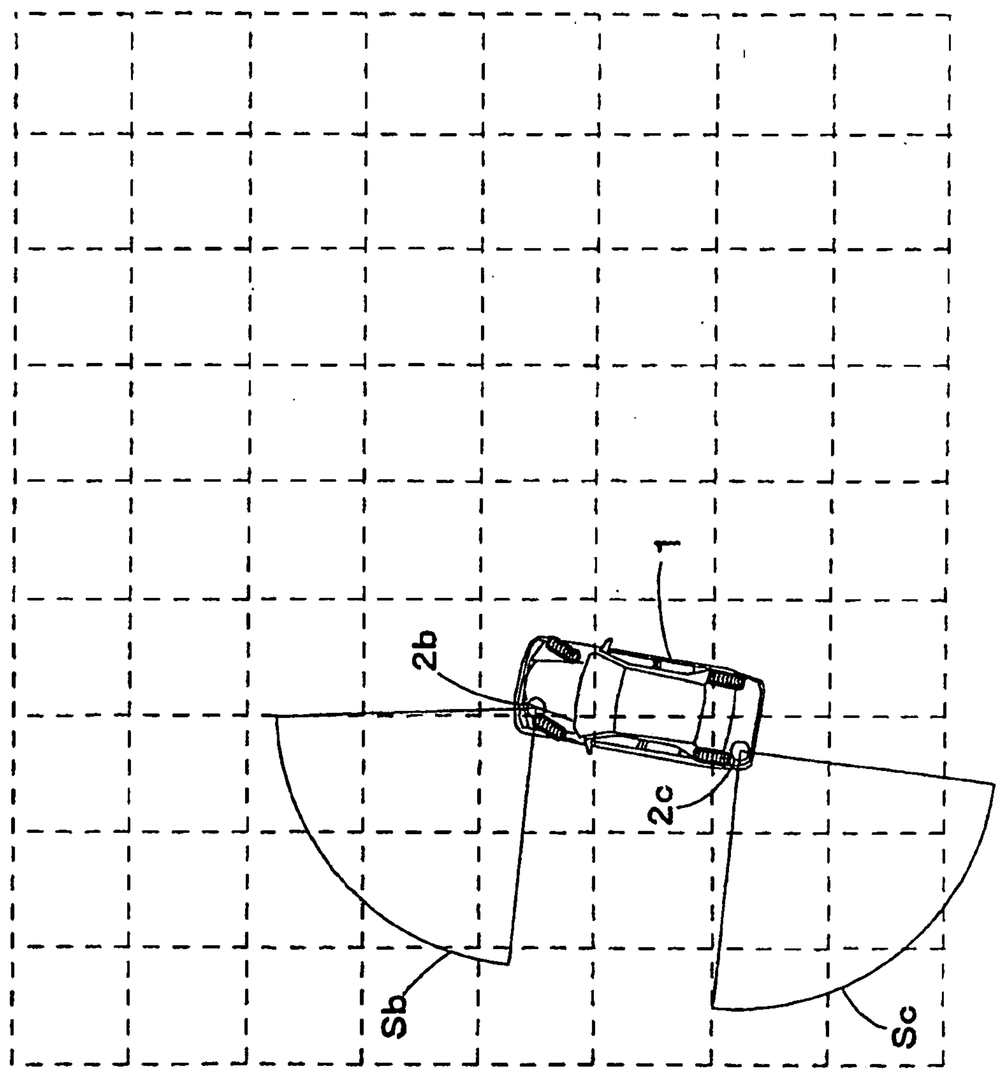

FIG. 9

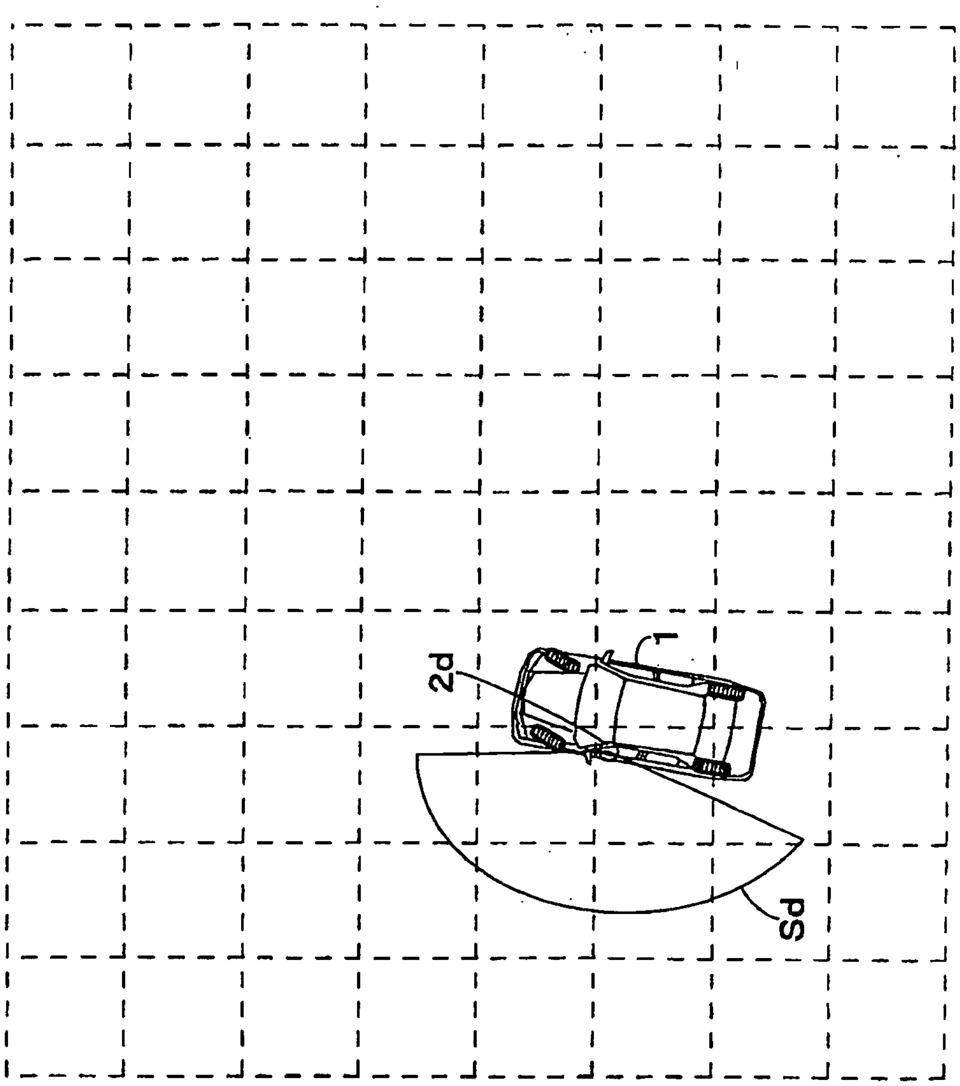

FIG. 10

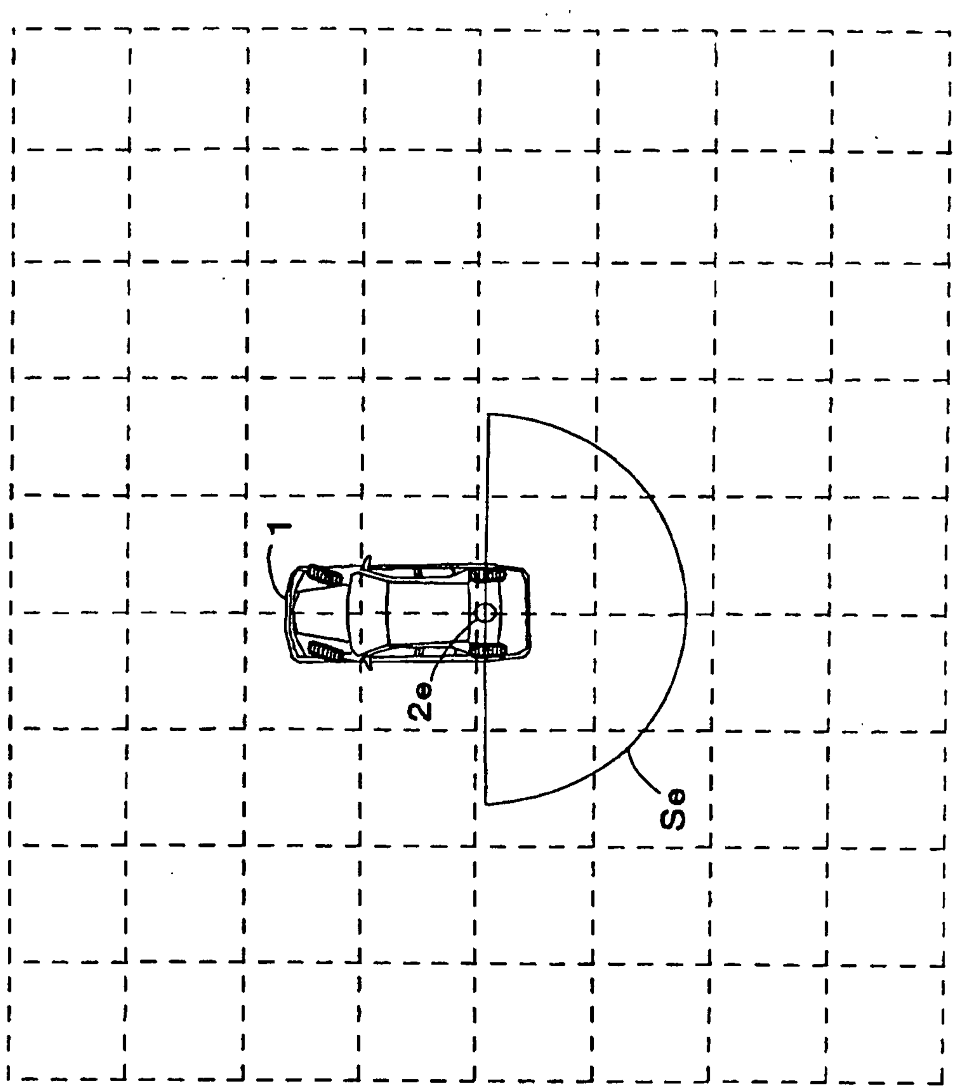

FIG. 11

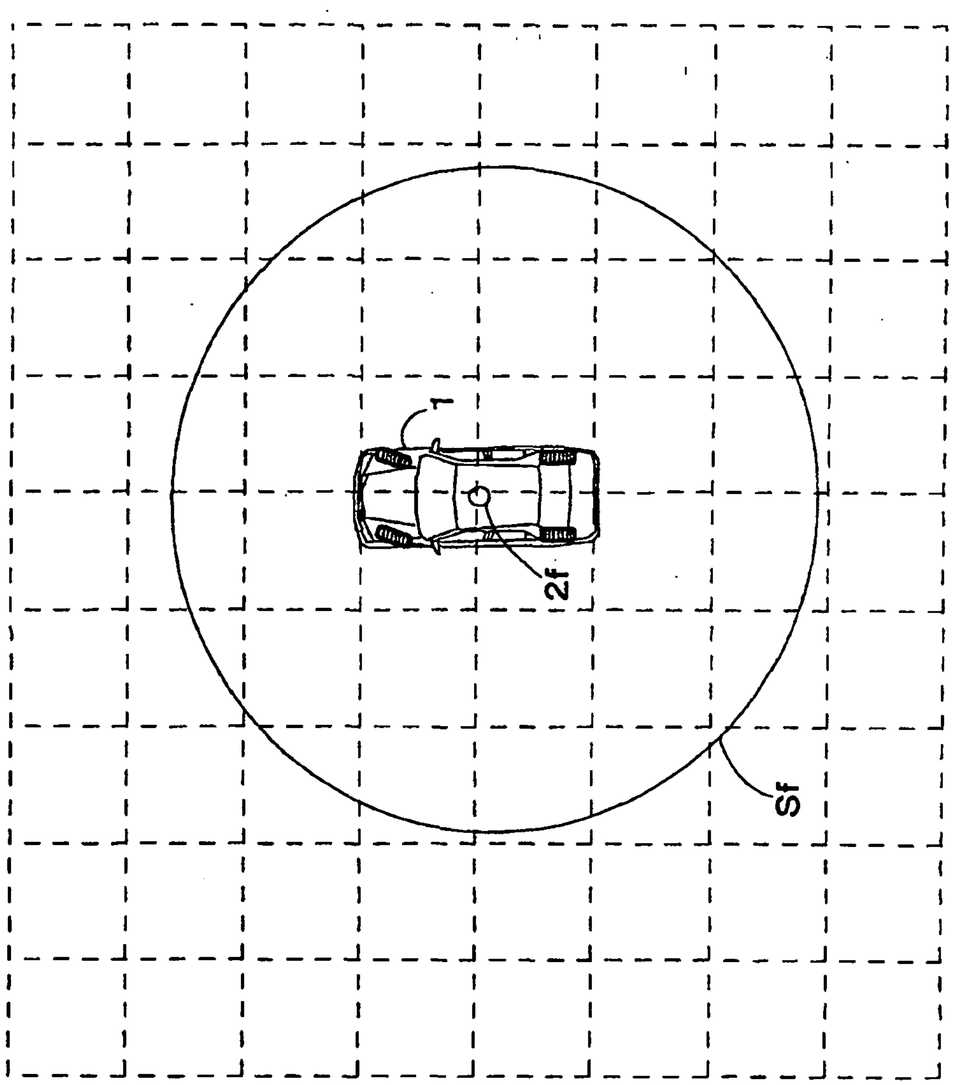

FIG. 12

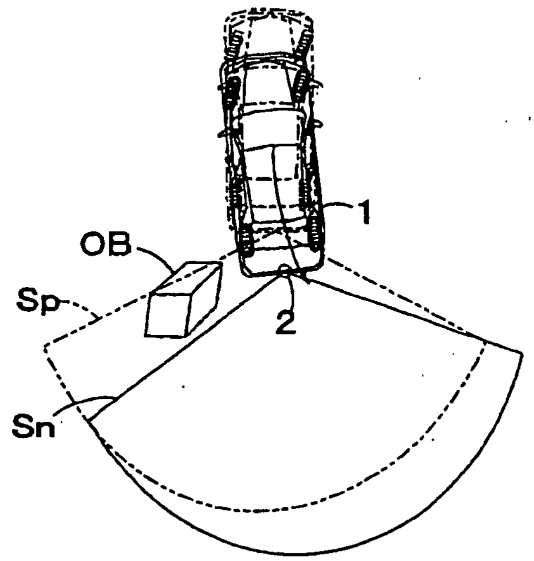


FIG. 13

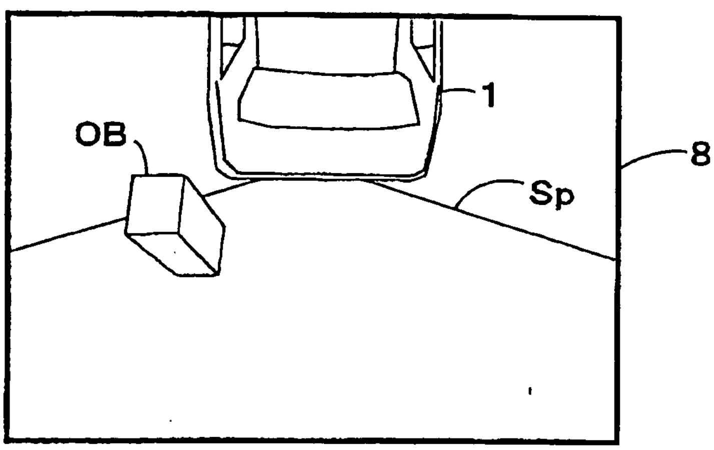

FIG. 14

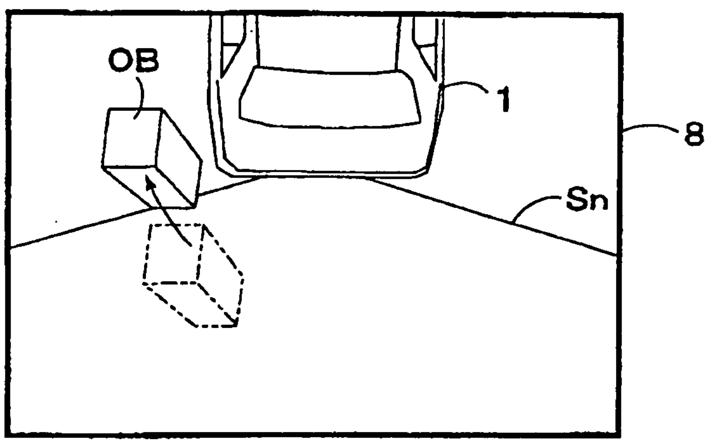

FIG. 15

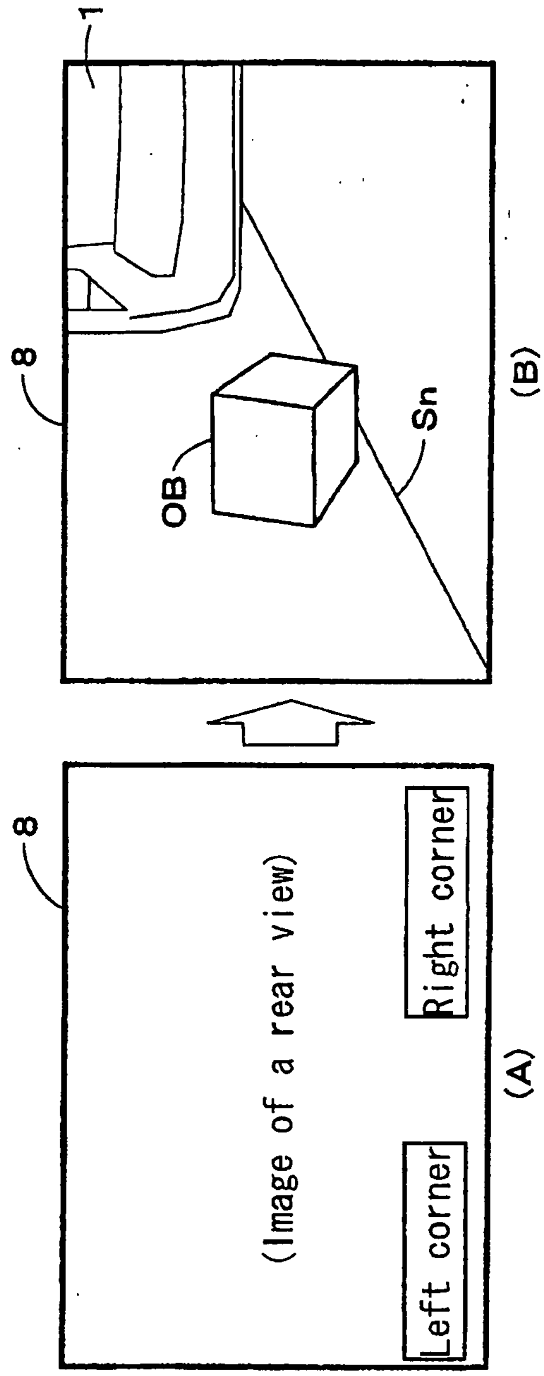

FIG. 16

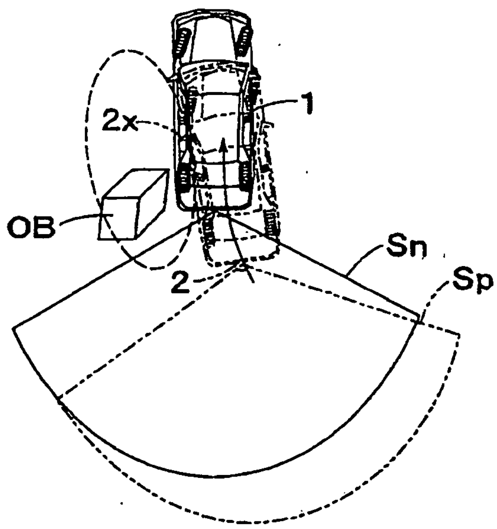


FIG. 17

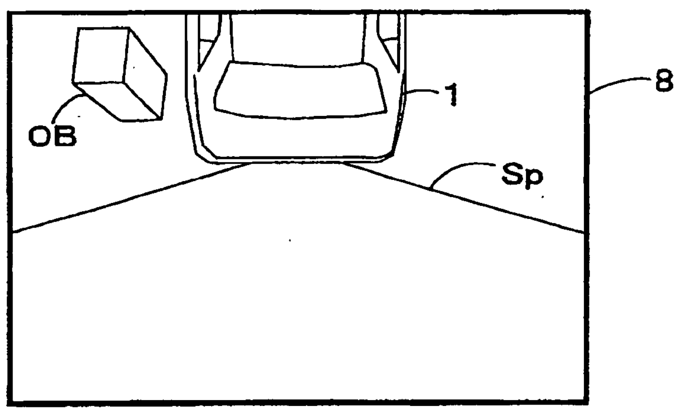


FIG. 18

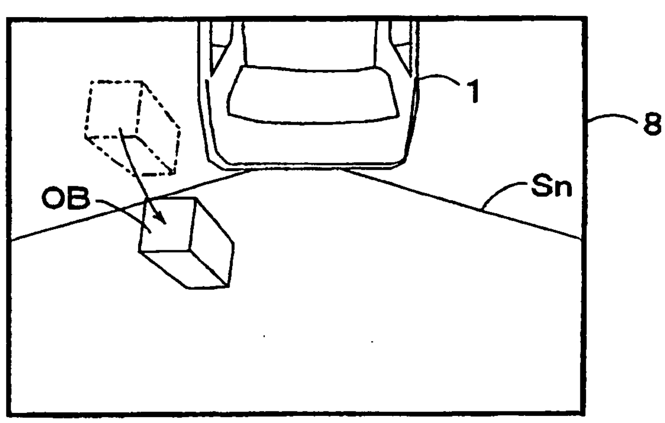

FIG. 19

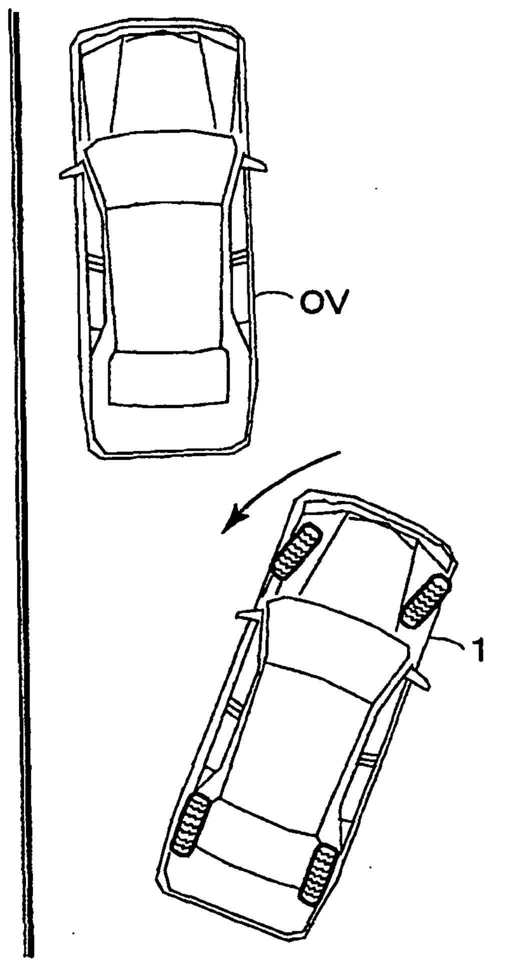

FIG. 20

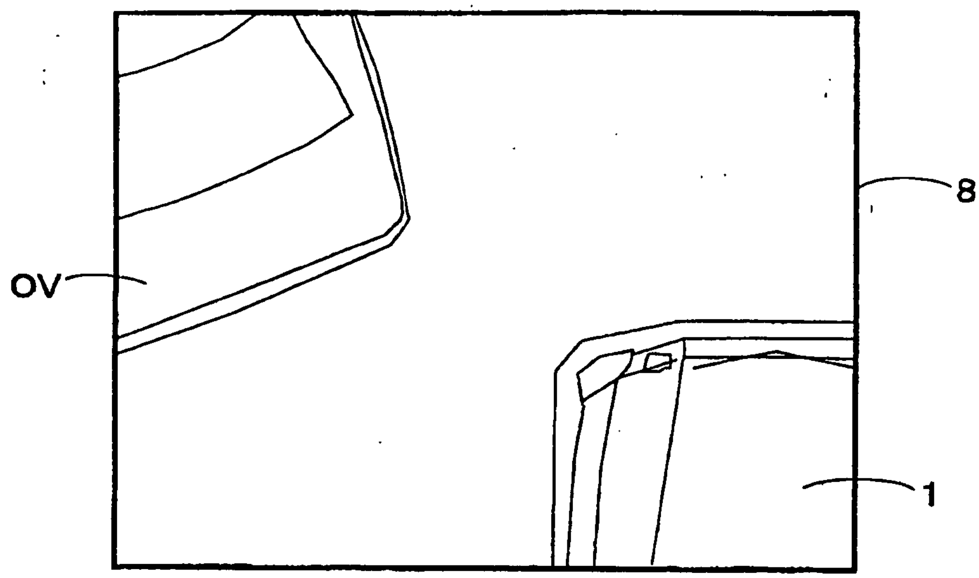


FIG. 21

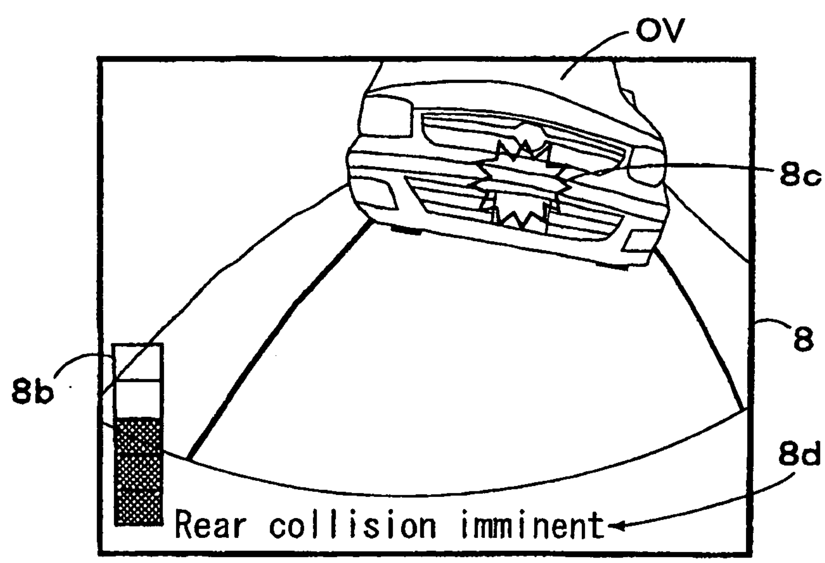

# F I G. 2 2

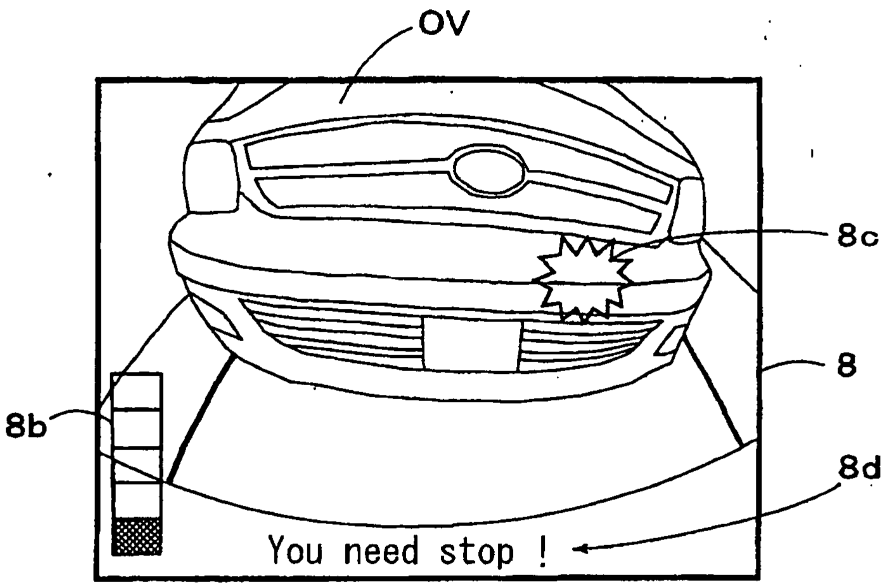


# F I G. 2 3

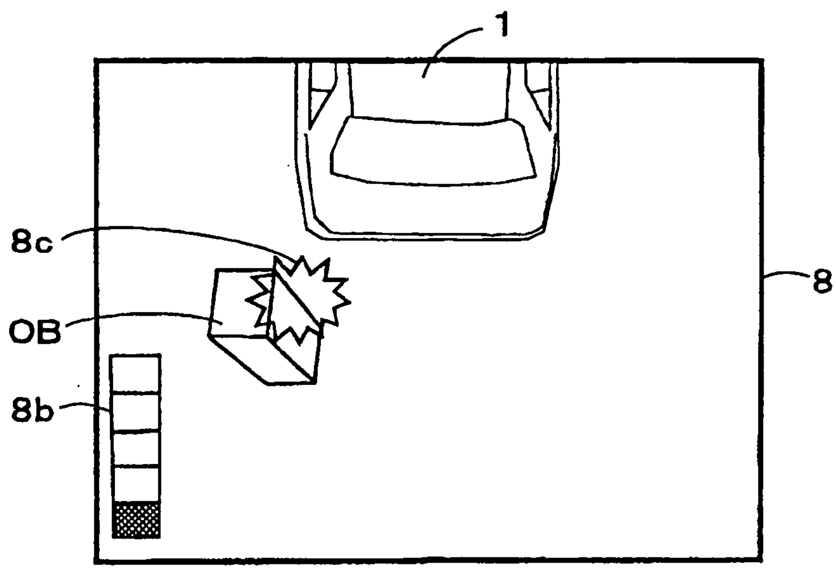

FIG. 24

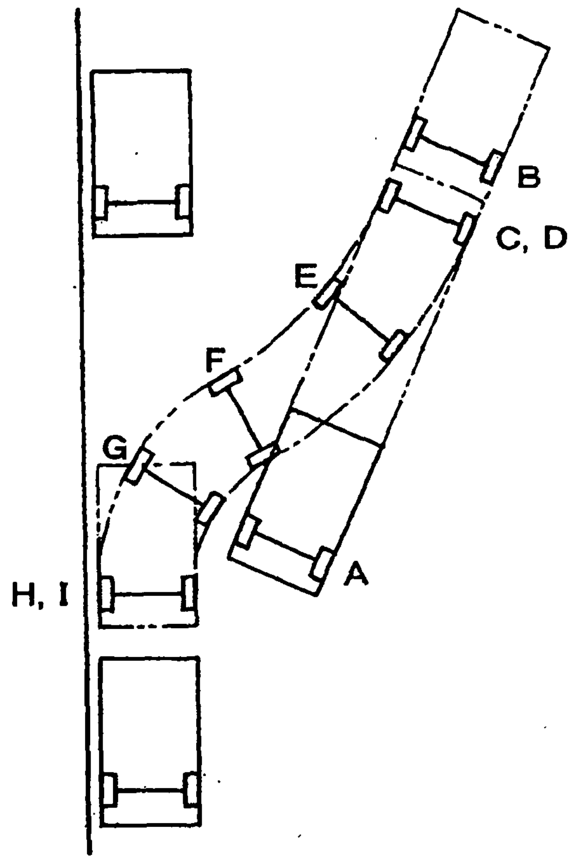

FIG. 25

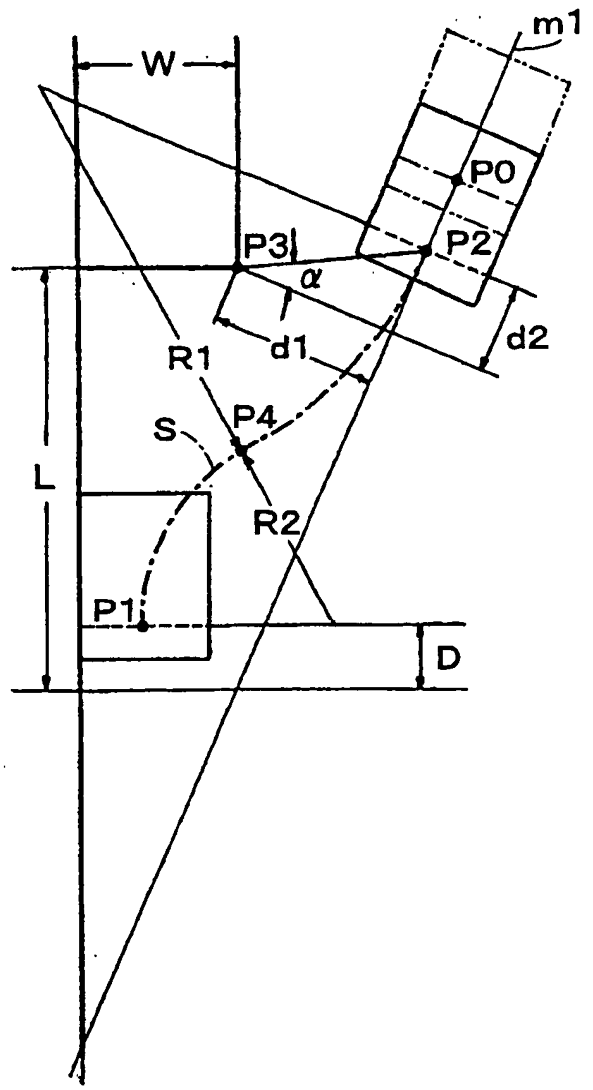

# FIG. 26

| Condition | Monitor displayed image | Driver's operation | Voice guidance | Judging standard for switching condition | Device used for judgment |
|---|---|---|---|---|---|
| A | | Decelerate vehicle with brake pedal depressed | | Vehicle speed less than a predetermined speed value | Vehicle wheel speed sensor |
| B | 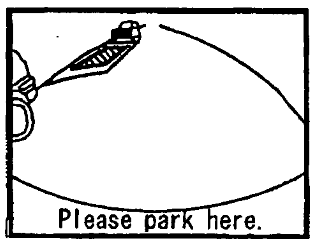 | Stop vehicle at an initial parking position with a shift lever shifted at a reverse stage | (with a parking space) Parking allowable (w/o parking space) Parking not allowable | Shift lever shifted at a reverse stage | Shift lever switch |
| C | 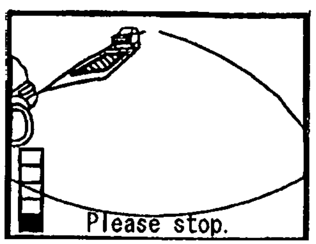 | Move vehicle rearward with a steering wheel maintained at a steering angle for a straight ahead movement | Please go back straight. | | |
| | | | pip-pip, pipipi, piiiii.... | Distance between a vehicle and a turning start position reduced | Vehicle wheel speed sensor |
| | | | Please stop. | Distance between a vehicle and a turning start position less a predetermined value | Vehicle wheel speed sensor |

# FIG. 27

| Condition | Monitor displayed image | Driver's operation | Voice guidance | Condition switching judge | Device used for judgment |
|---|---|---|---|---|---|
| D | 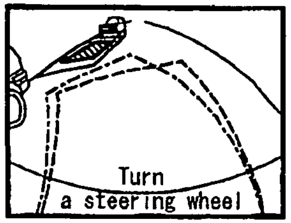 | Turn a steering wheel with a target turning radius R1 | Turn a steering wheel | Vehicle speed is less than a predetermined speed value | Vehicle wheel speed sensor |
| | | | Dingdong<br>They matched. | Difference between a target steering angle and a current steering angle is less than a predetermined value | Steering angle sensor |
| E | 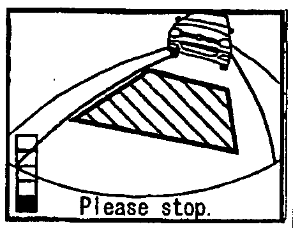 | Move the vehicle rearward to a position for switching a turning direction of a steering wheel | pip-pip, pipipi, piiiii....a | Distance between the vehicle and the steering direction switching position reduced | Vehicle wheel speed sensor |
| | | | Please stop. | Distance between the vehicle and the steering direction switching position less than a predetermined value | Vehicle wheel speed sensor |
| | | | Turn the steering wheel in an opposite turning direction | Vehicle speed less than a predetermined speed value | Vehicle wheel speed sensor |
| F | 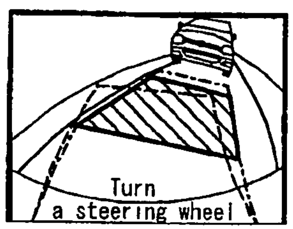 | Turn a steering wheel with a target turning radius R2 | Turn a steering wheel | - | |
| | | | Dingdong<br>They matched. | Difference between a target steering angle and a current steering angle less than a predetermined value | Steering angle sensor |
| | | | Please go back. | | |

# FIG. 28

| Condition | Monitor displayed image | Driver's operation | Voice guidance | Condition switching judge | Device used for judgment |
|---|---|---|---|---|---|
| G | 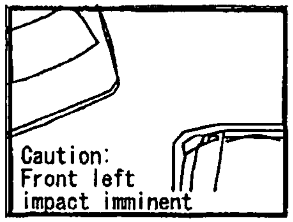  | Adjust a steering angle or decelerate a vehicle following a display | Be alert of your front left side. | Distance between a front end portion of an own vehicle and the other vehicle ahead at the left side less than a predetermined value | Camera, Vehicle wheel speed sensor |
| H | 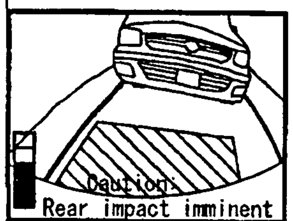  | Move a vehicle rearward following a display and a voice | Be alert of your rear side. | Distance between an own vehicle and a rear vehicle less than a predetermined value | Camera, Vehicle wheel speed sensor |
| | | | pip-pip...... | Distance between an own vehicle and a rear vehicle less than a predetermined value | Camera, Vehicle wheel speed sensor |
| | | | pipipi...... | Distance between an own vehicle and a rear vehicle less than a predetermined value | Camera, Vehicle wheel speed sensor |
| I | 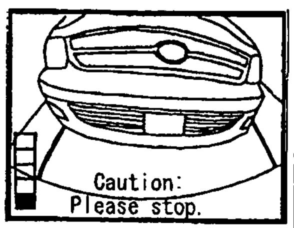  | Stop the vehicle. | piiiiiiiii............ Please stop. | Distance between an own vehicle and a rear vehicle less than a predetermined value | Camera, Vehicle wheel speed sensor |
| | | Return a steering wheel to an original position | Return a steering wheel. | Vehicle speed less than a predetermined speed value | Camera, Vehicle wheel speed sensor |

FIG. 29

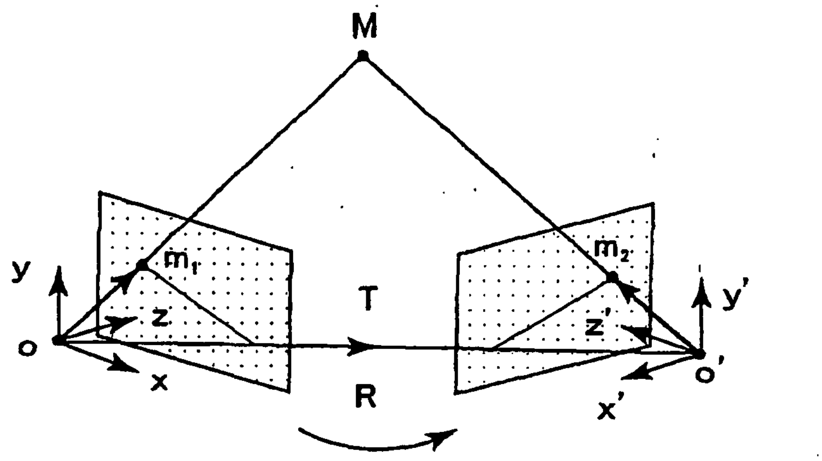


FIG. 30

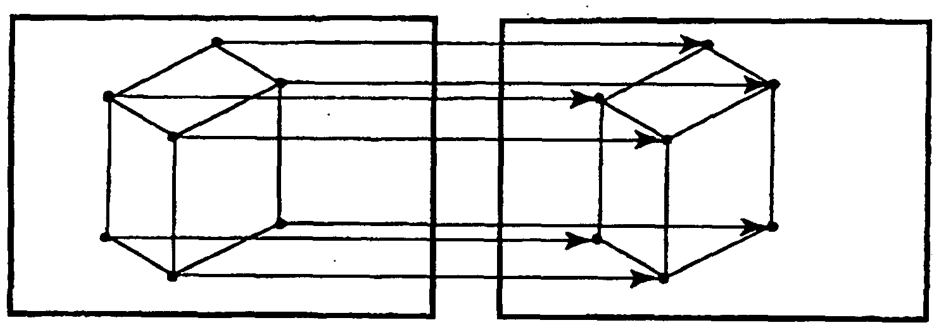

FIG. 31

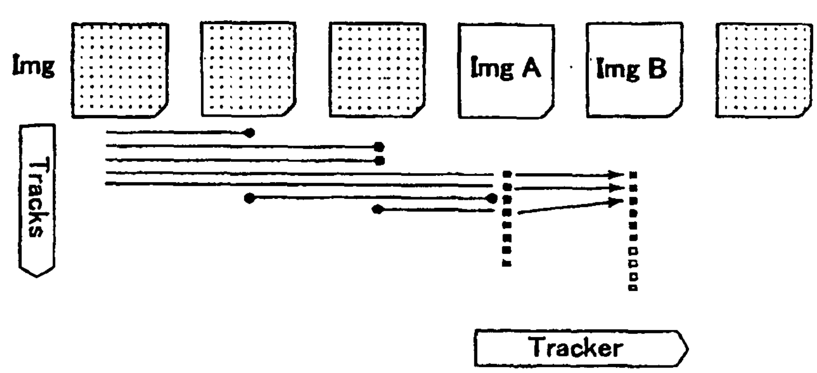

European Patent Office

# EUROPEAN SEARCH REPORT

Application Number
EP 03 02 2000

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 094 337 A (MATSUSHITA ELECTRIC IND CO LTD) 25 April 2001 (2001-04-25)<br>* abstract; figures 3,4,6,10 *<br>* paragraphs [0012]-[0015],[0019],[0055],[0056] * | 1-6 | B60Q1/48 |
| X | EP 1 005 234 A (MATSUSHITA ELECTRIC IND CO LTD) 31 May 2000 (2000-05-31)<br>* abstract; figures 1-3,5,6 * | 1-6 | |
| X | DE 101 09 350 A (TOYODA AUTOMATIC LOOM WORKS) 20 September 2001 (2001-09-20)<br>* abstract *<br>* column 8 *<br>* figures 2,3 * | 1-7 | |

TECHNICAL FIELDS SEARCHED (Int.Cl.7)

B60Q

The present search report has been drawn up for all claims

| Place of search | Date of completion of the search | Examiner |
|---|---|---|
| MUNICH | 26 November 2003 | Geuss, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 03 02 2000

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2003

| Patent document cited in search report | Publication date | Patent family member(s) | Publication date |
|---|---|---|---|
| EP 1094337 A | 25-04-2001 | EP 1094337 A2 | 25-04-2001 |
| | | JP 2001187553 A | 10-07-2001 |
| | | US 6483429 B1 | 19-11-2002 |
| EP 1005234 A | 31-05-2000 | JP 2000161915 A | 16-06-2000 |
| | | CN 1255624 A | 07-06-2000 |
| | | EP 1005234 A2 | 31-05-2000 |
| | | US 6172601 B1 | 09-01-2001 |
| DE 10109350 A | 20-09-2001 | JP 3427823 B2 | 22-07-2003 |
| | | JP 2001315604 A | 13-11-2001 |
| | | DE 10109350 A1 | 20-09-2001 |
| | | GB 2359796 A ,B | 05-09-2001 |
| | | US 2001017591 A1 | 30-08-2001 |

EPO FORM P0459

For more details about this annex : see Official Journal of the European Patent Office, No. 12/82